# EUROPEAN PATENT SPECIFICATION

(11) **EP 2 081 058 B1**
(45) Date of publication and mention of the grant of the patent: **21.08.2019**
(21) Application number: 09150663.4
(22) Date of filing: 15.01.2009
(51) Int. Cl.: G02B 5/02, B42D 15/02, B44F 1/06

(54) **barrier structure having a surface relief**
Sperrstruktur mit Oberflächenrelief
Structure de barrière avec relief à sa surface

(30) Priority: 16.01.2008 GB 0800716; 19.09.2008 GB 0817179; 19.09.2008 GB 0817180
(43) Date of publication of application: 22.07.2009
(73) Proprietor: Holographic Security Innovations Limited, Fleet, Hampshire GU51 3EY (GB)
(72) Inventor: Drinkwater, Kenneth John, Fleet Hampshire GU51 3EY (GB)
(74) Representative: Yeadon IP Limited

(56) References cited:
- EP-A1- 0 688 838
- EP-A2- 0 466 118
- EP-A2- 1 132 786
- WO-A1-03/070483
- DE-A1- 1 572 939
- DE-A1- 10 326 644
- JP-A- 2005 144 878
- US-A- 5 215 576
- US-A1- 2007 089 831

## Description

### INTRODUCTION

As an introduction to the field of the invention, high performance diffusers and directional diffusers and high efficiency, high opacity light barrier structures are used in a number of technical and optical security applications. Examples include barrier films for light and gas and high opacity light barrier structures used in the scratch card industry for PIN number protection.

In the electronic display field usage areas include back reflectors and transmission controlled angle diffusers for light control applications. Examples in the optical security field include potentially low cost, high volume localised and patterned diffuser structures and also selectively directional diffuser structures to use as low cost high volume securely imaged optically variable structures.

Another security application is in the field of data protection overlays to use these ordered structures or random diffusing structures metallised using their property of enhancement of opacity by optical scattering or diffraction in order to to enhance the opacity against number read through of printed scratch off foils, films and labels.

### BACKGROUND

To provide a background to the invention, holograms, diffusers and diffractive structures have been used in optical security, display and technical applications in a number of ways.

There are several patents on various security related optical imaging techniques and diffractive structures for holographic and diffractive security devices, generally now restricted to narrow details on existing processes and optical security features as the major process patents have long since expired. Most of these relate to different ways of organising diffractive structures.

Technical diffusers of high efficiency, particularly if these are directionally sensitive, are of interest in the technical displays fields for display lighting and relevant to such areas as architectural films and solar concentrators.

For example there is previous work on the use of holographic diffusers for reflective LCD display back reflectors using a directional holographic diffuser to selectively concentrate directional light into a selective viewing zone. Disadvantages of these holographic / diffractive approaches include loss of light due to unwanted diffraction orders which limits the efficiency. There are also several classes of non diffractive micro optic back reflectors consisting of moulded formed micro prisms or micro triangles designed to direct light into a viewer's field of view.

Very low light transmission plus the avoidance of visualised pinholes is useful in many flexible systems to avoid unwanted light transmission such as in double sided print to ensure a print can only be visible from one side and not interrupt another print e.g. hang tags, security cards and holographic security foils.

One known problem for the manufacture of improved barrier films is that the flexibility of the substrate and the generally brittle nature of thicker layers of aluminium, other opaque metals for light barriers, or of dielectric layers (eg aluminium oxide, AlOx) for gas barriers is that thick films tend to become inflexible and brittle and prone to cracking and pin-holing if flexure of the filmic or paper substrate occurs.

It is known to use flexible light barrier structures consisting of two planar aluminium films laminated together to form a flexible printable material which has low pinhole and light transmission properties for use in printed labelling or flags.

Another application of light barrier and highly reflective structures is in the displays industry for example in LCD displays where flexible displays need flexible light guides with low pin-holing, low losses and low light leakage for illumination back light guiding. Another previous flexible light barrier structure is used in a data protection optical scratch off foil structure where a metallised hologram is under-laid by a relatively thick light absorbing flexible layer to promote light absorption and to give the additional planar aluminium layer some tolerance to flexing without cracking and subsequent light transmission.

Surface relief microstructures and the embossed production thereof are known, for example in embossed holograms and in other moulded and micro replicated technical products such as micro-lenses, micro prisms, etc. One known process of manufacturing microscopic surface relief is by embossing into a film incorporating a soft thermo-plastic coating to form a replica of the surface relief pattern of the embossing roller.

Curing methods for producing micro optics and holographic structures are also known, for example by casting an embossing UV curable resin onto a drum and then curing in situ by UV radiation curing either through the filmic substrate (in the case of a metal embossing cylinder) or by curing through a UV transparent embossing cylinder.

Gas barrier films are of interest in the food packaging industry where today single layers of aluminium metallised films or dielectric vacuum deposited films are used as gas barriers to maintain food freshness. There has been some work on two planar layers of vacuum coated material to provide an enhancement to the barrier properties. Gas barrier films are also of interests in the displays industry where a drive towards plastic flexible substrates to avoid the use of glass brings with it the requirement for dramatically enhanced and flexible gas barrier film structures to avoid the gradual oxidation and water attack on the reactive materials used within current displays to provide a reasonable lifetime for plastic displays. There has been some work on this already but only using layers of planar structures.

It is also known to provide a scratch off card structure for communicating information in confidence to a purchaser of the card to enable, for example, the secure purchase of a PIN number to access airtime on Mobile networks or passwords or internet time. The confidential information is protected by a high opacity scratch off layer - often a holographic foil or latex ink, which is removed by gentle abrasion to reveal the PIN number to the purchaser.

It is paramount that the scratch off concealment layer is both secure against counterfeit and highly opaque to prevent unauthorised access to the number by read through methods using high intensity light sources. Hence, holographic (embossed) diffractive foil structures are often used.

It is also paramount that the opacity of the holographic scratch off foil is high enough to defeat all known potential forms of number read through using high intensity light sources. It is also important that the foil opacity remains high even under mechanical deformation or bending of the foil.

EP1132786 discloses a holographic element and process for transferring a plurality of holographic images from a polymeric support to a paper or tissue support. WO03/070483 discloses a security laminate comprising a retroreflective layer comprising a plurality of retroreflective microbeads partially embedded in and protruding from a beadbond layer and having image receptive material disposed around the protruding microspheres.

US5215576 discloses a water based scratch-off ink for gaming forms employing a water based dispersion of acrylic and resin, at approximately equal proportions of resin and water, by weight.

JP2005/144878 discloses a laminated film for balloon and balloon. The laminated film is disclosed to have a high floating capacity and a form holding capacity and to be transparent.

### STATEMENT OF THE INVENTION

In a first aspect of the invention there is provided a structure comprising: a template layer having a first surface having an optically active surface relief; and an epibarrier layer provided over the first surface of the template layer, the epibarrier layer having an optically active surface relief corresponding substantially to that of the first surface of the template layer, wherein the template layer comprises a plurality of particles arranged to span substantially an entire thickness of the template layer and to provide said optically active surface relief, wherein the template layer is formed over a first barrier layer, characterised in that the first barrier layer is formed from a metal and is provided with an optically active surface relief, the optically active surface relief having optionally at least one selected from amongst a holographic surface relief, a non-holographic diffractive surface relief and a diffusive surface relief.

Thus, the template layer effectively comprises a monolayer of particles, the monolayer of particles being supported on a substrate on which the template layer is formed.

This has the advantage that a structure having an optically active surface relief may be fabricated in a relatively rapid manner without a requirement to provide apparatus to emboss the structure and undertake an embossing process.

The presence of the template layer, which 'deplanarises' what would otherwise be a relatively flat surface of the epibarrier layer, reduces a propensity of the epibarrier layer to crack, e.g. when subject to a bending force. This is particularly useful where a barrier layer is formed from a metal oxide material.

It is to be understood that the term epibarrier layer refers to a layer formed over the template layer.

Forming the template layer over a first barrier layer has the advantage that a structure having two barrier layers, at least one having an optically active surface relief may be formed in a relatively simple manner.

The epibarrier layer is formed from at least one selected from amongst a metal and a metal oxide.

The use of a metal oxide allows a transparent barrier layer to be formed in the case that a transparent metal oxide is used. In the case that the first and epibarrier layers are both formed from a transparent metal oxide a transparent structure may be formed. The particles are preferably bound to a binder material provided between the particles, the particles optionally comprising at least one selected from amongst a metal and a ceramic material, the ceramic material being optionally aluminium trioxide, titanium dioxide or calcium carbonate and wherein the binder is optionally a soft polymer, preferably an acrylate.

Thus, in some embodiments the particles provide the optically active surface relief of the template layer by protruding from a layer of binder material. The binder material is deposited on a substrate such as the first barrier layer in embodiments having the first barrier layer.

This has the advantage that the template layer may be formed in a relatively rapid and simple manner. Furthermore, the nature of the optically active surface may be controlled by varying the number and size of particles in a given volume of binder. Thus, a higher concentration of particles in the binder will result in a smaller spacing between particles whilst a lower concentration of particles will result in a larger spacing between particles.

Similarly, an average size of the particles may be varied to vary a surface relief of the template layer.

In some embodiments the template layer is formed to have a weight of around one gramme per square meter. In some embodiments the template layer has a weight of from 0.25 to around 1.5 grammes per square meter. Other weights are also useful.

The binder layer may have a thickness less than or substantially equal to half an average diameter of the particles.

The template layer may have a surface relief having a local variation in height from a peak region to a valley region of the surface as viewed in cross-section in the range of from around 0.1 to around 5 microns, preferably around 2 microns, the surface relief further having a lateral spacing between respective adjacent peak regions or respective adjacent valley regions of from around 0.1 to around 5 microns, preferably around 2 microns.

The average diameter of the particles may be in the range from around 1 x10⁻⁶m (1 micron) to around 5 x10⁻⁶m (5 microns), preferably from around 1 x10⁻⁶m (1 micron) to around 3.5 x10⁻⁶m (3.5 microns), more preferably around 2 x10⁻⁶m (2 microns).

Preferably a layer of a scratch-off adhesive is provided over the epibarrier layer whereby the structure may be adhered to an article, the structure being optionally provided on a carrier.

In a second aspect of the invention there is provided an ultrahigh opacity holographic scratch-off foil comprising a structure according to the first aspect wherein the optically active surface relief is a holographic surface relief and the first and epibarrier layers are each formed from a metal.

In a third aspect of the invention there is provided a substantially gas-impermeable structure comprising a structure according to the first or second aspect of the invention wherein optionally the first barrier layer and the epibarrier layer are formed respectively formed from one selected from amongst metal and metal, metal and metal oxide, the metal oxide being optionally a transparent metal oxide.

This structure has the advantage that a barrier layer having increased resistance to cracking and delamination may be formed due to the optically active surface relief of the epibarrier layer and optionally the first barrier layer.

The use of a transparent metal oxide has the advantage that a transparent structure may be formed.

In a fourth aspect of the invention there is provided a method of forming a structure comprising: forming a template layer having a first surface having an optically active surface relief; and forming an epibarrier layer over the template layer, the epibarrier layer having a first surface having an optically active surface relief corresponding substantially to that of the template layer, wherein the step of forming the template layer comprises depositing a formulation comprising a plurality of particles provided in a binder, the template layer being formed whereby the particles are arranged to span substantially an entire thickness of the template layer and to provide the optically active surface relief, the method comprising forming the template layer over a first barrier layer, characterised in that the method comprises forming the first barrier layer from a metal and providing the first barrier layer with an optically active surface relief, the optically active surface relief having optionally at least one selected from amongst a holographic surface relief, a non-holographic diffractive surface relief and a diffusive surface relief.

Preferably the template layer is formed by means of a gravure coating process.

Preferably the method comprises the epibarrier layer being optionally formed from at least one selected from amongst a metal and a metal oxide, the method optionally further comprising the step of embossing the first barrier layer thereby to provide the first barrier layer with an optically active surface relief, preferably a holographic surface relief.

In a fifth aspect of the invention there is provided a method of protecting information comprising the step of bonding a structure according to the first or second aspect to a surface bearing confidential information by means of said scratch-off adhesive.

The aspects of the invention relate to two key realisations. Firstly, that the opacity of a scratch off foil or other light barrier can be significantly enhanced by the inclusion of a microstructured metal film with a random optical diffusion or light scattering structure . Secondly that a good way to form such a second optical microstructure (given that by conventional hot stamp foil holographic production this would be prohibitively difficult by holographic embossing using heat and pressure) is by utilising coating and metallising techniques especially using a thin gravure coating with a high filler particle content of the right size (typically a filler particle size of the order of the wavelength of light e.g. 2 micro metres to create a thin but microscopically rough layer on a substrate. The filler particles are bonded to the substrate by means of a binder layer such as an adhesive layer, the particles being deposited on the substrate typically by depositing a wet composition comprising an adhesive and the particles (the film is formed to be as thin as possible) and then creating an effective diffuser by metallising the structure so that the gravure coating provides a mould for the metal film. The film is arranged to bond the filler particles to form a wetting layer over the surface of a substrate.

A very high efficency diffuser is made possible because a structure may be formed having surface relief features with a relatively high aspect ratio and a relatively small lateral spacing between peaks and valleys of the surface relief as compared with conventional embossing techniques where the surface relief is typically subject to relaxation following embossing, resulting in a reduction in the extent to which the structure diffuses light.

It is to be understood that an optically effective light barrier structure can be provided by forming one of the barrier layers having the surface relief microstructure from a metallic material. For gas barrier structures not requiring optical opacity metal oxide barrier layers may be used without a requirement to use barrier layers formed from a metallic material. Thus, transparent and/or translucent metal oxide layers may be used.

The invention can be summarised as follows ...
- A new form of highly effective improved light and gas barrier structure particularly useful in one embodiment for scratch off foils used for data protection, light barrier structures and gas barrier structures.
- A new form of highly effective improved light barrier structure utilising a bi-layer metallised film sandwich structure wherein both layers are microstructured (scale size depth 0.1 µm to 1.3 µm), typically with an efficient diffuser and / or holographic structure (i.e a random or ordered micro-structures) to achieve superior performance and the metallised layers are separated by a thin (average thickness c 0.2 - 1 x10⁻⁶m (0.2-1micron)) microscopically structured layer. In some cases this layer can be randomly microscopically ordered to form one of the active micro-structured surfaces as a highly efficient optical diffuser when metallised to provide an extremely high optical density layer and highly efficient scattering layer.

A particularly advantageous embodiment of this is in the form of an advanced high opacity holographic scratch off foil where the bi layer structure offers superior high opacity properties and which provides a retention of the highly opaque properties even under bending deformation designed to crack aluminium layers.
- A new form of high efficiency optical diffuser which can be metallised or non metallised and are suitable for optical security devices, e.g. data protection foils and labels, and technical diffusing films.

A new form of highly efficient optical diffusing manufacture of highly efficient diffusing structures using high volume low cost reel to reel coating and metallising techniques made by metallising a selective patterned efficient diffusing surface formed by the same methods as above.

The diffusing films may be patterned and may be made into directional diffusers to form a new class of lower cost mass manufacturable optically variable devices.

The invention is explained in detail as follows ...
- Description of a new form of highly effective improved light and gas barrier structures particularly useful for example for light blocking layers scratch off foils used for data protection.
- A new form of highly effective improved light barrier structure utilising a bi-layer metallised film sandwich structure wherein both layers are microstructured (scale size depth 0.1 um to 1.3 um), typically with an efficient diffuser and / or holographic structure (i.e a random or ordered micro-structures) to achieve superior performance and the metallised layers are separated by a thin (average thickness c 0.2 - 1 x10⁻⁶m (0.2-1micron)) microscopically structured layer. In some cases this layer can be randomly microscopically ordered to form one of the active micro-structured surfaces as a highly efficient optical diffuser when metallised to provide an extremely high optical density layer and highly efficient scattering layer.

A particular advantageous embodiment of this is in the form of an advanced high opacity holographic scratch off foil where the bi layer structure offers superior high opacity properties and which provides a retention of the highly opaque properties even under bending deformation designed to crack aluminium layers.

In this new class of improved light barrier structures the structure consists of ......
.... two metallised layers, one of which has a microscopic optically active surface relief such as a holographic image or diffractive structure and is metallised, which is separated by a thin spacer layer itself containing on the opposite aside a surface relief microstructure pattern which can be either an ordered diffractive pattern or random diffusing pattern of fine structure scale size 0.2 to 1.3 x10⁻⁶m (0.2-1.3 microns) which becomes replicated within the surface of the lower metallised layer which is applied to the spacer layer by subsequent metallization forming a highly efficient optical diffuser structure and thus the high opacity light barrier structure.

....Here the second metal layer consists of a surface relief optical diffusion or diffraction structure designed to increase the opacity of the structure to light transmission by scattering or diffraction of incident light plus local alteration of surface topography to increase metallization optical density.

......The preferred structure is to use an optically diffusing random micro-structure of height and depth scale size of the order of the wavelength of light to ensure a very efficient diffusion.

... the new structure operates to enhance opacity over known devices by the use of enhanced light absorption due to the enhanced metal optical density due to the micro structured surface, and also enhances opacity by additionally light diffusion and scatter due to the microscopic surface relief on the second metallic layer.

...The spacer layer typically (but not exclusively , and other spacers, structure sizes and other methods may be contemplated) consists of an average thickness of 0.2 to 1.3 x10⁻⁶m (0.2-1.3 micron) with a high density fine structure scale size of localised height and width approximately 1.0 - 3.5 x10⁻⁶m (1.0-3.5 micron) matching the dimensions of usually a particulate material used in coating (in one embodiment) with a larger spatial structure localising the deposits overlaid on this from the application roller (usually gravure for example) typically of spatial size in a range 5 - 30µm but vertical size again constrained by the coating characteristics to a mean thickness of 0.2 - 1.1 µm and a scale height fine structure of 1.0 - 2.7 x10⁻⁶m (1.0-2.7 micron). This method is particularly suited to a preferred manufacturing technique based on gravure coating.

The metallic fine structure to form an efficient diffuser is then formed by using this spacer layer surface relief as a mould when over metallising by vacuum deposition to replicate the surface relief pattern typically using aluminium or similar.

An alternative in this invention to form the micro structured spacer layer is to use conventional diffractive embossing, using either a diffractive or random diffusing shim, preferably in one method by using a UV cured embossing system by coating the spacer layer as an uncured embossing lacquer impressing it against a micro-structured embossing shim and curing the lacquer to harden it either via direct UV exposure whilst on shim in situ or immediately after release from the shim before the fine structure pattern has had time to relax.

One particularly advantageous application is to enhance the opacity of holographic scratch off foils in data protection applications by using the existing metallised holographic layer, generally a metallised holographic or diffractive surface relief, backed by a thin layer of micro-pattern diffusing structure scale thickness less than or equal to 1-1.5 um, forming under the holographic layer a thin diffusing structure which enhances the opacity of the structure by diffusion, aluminium opacity (reduction of combined pinholes) increases the opacity of the structure under bending by reducing any tendency for the metallised layers to crack. The micro optic diffusing structure would typically be formed by gravure printing / coating or UV casting of scale size average thickness 1um or less and average large scale structure spacing typically 35 x10⁻⁶m (35 microns) or less with random fine repeated structure of 5 x10⁻⁶m (5 microns) or less where this second structure would be metallised to make this both highly diffusing and highly opaque. This second layer would then be coated with a conventional heat activated scratch off adhesive / ink to form a conventional holographic scratch off hot stamping foil that could be transferred to a scratch off card under heat and pressure.

The second metallic layer in a composite structure, such as a scratch card or phone-card scratch off foil, remains invisible and buried within the composite structure although it remains functionally strongly diffusing and scattering to any incident light upon it, for example in any attempts to try to access PIN numbers via light transmission using high intensity light sources.

....The top and generally visible metal layer may advantageously carry a holographic or diffractive pattern or advantageously contain a similar micro diffuser or patterned areas of such a micro diffuser.

.... Optionally the whole above structure may be coated with a soft removable scratch off heat activated adhesive and be mounted on a release carrier such that it can be transferred under heat and pressure to a card to act as an improved high opacity data protection scratch off foil. The card can be a paper or plastic scratch off card, phone card , gift voucher or other security printed document carrying a PIN number that requires concealment until usage using a scratch off foil as detailed herein.

In this new light barrier structure the first metallised layer may be plain or desirably patterned or all over diffusing or diffractively patterned e.g. with a custom hologram; the second thin sub micron (10⁻⁶m) diffusing spacer layer consists of a clear non light absorbing polymer layer and again ideally adjusted to provide a good adhesion for subsequent metallised layers and containing a micro roughened or 'micro structured' surface relief formed using the contoured surface of the application roller applied by traditional wet gravure coating / printing or alternatively by UV casting a micro structure off an embossing shim as discussed later. The final layer consists of a second layer of metallization (usually aluminium, but not restricted to this) which conforms to the spacer layer surface relief to provide a reflective metal coating containing the micro roughened surface relief pattern of the spacer layer - this micro roughened reflective diffuser structure offers superior opacity over previous structures by incorporating a high degree of diffusion into any transmitted light thus decreasing the transmitted light throughput and helping to increase the opacity.

The light barrier improvements of these structures over previous work relies on a number of primary and secondary things ...
- The recognition that a diffusing structure actually adds to optical density of the layers significantly by reducing transmitted direct light flux due to the optical diffusion - adding the structure to a metal layer even though the opacity of the metal layer can be high thus adds to the opacity of the overall structure because any transmitted light through the underlying surface relief profiled metal layer is additionally also strongly diffused. There are also additionally a number of extremely useful secondary effects that increase the effect of this diffusing micro structure on overall optical density.
- The recognition that a micro rough surface de-planarises the metallic or clear barrier coatings and thus provides a coating with greater flexibility and greater resistance to cracking on bending so the diffusing micro roughened surface also renders the metal layer applied to it far more resilient to cracking as it is no longer a simple planar surface but rather has a random topology.
- The recognition that use of a soft intermediate layer material for the micro roughened surface allows a good retention of incident metal flux ('retention factor') during second metallization to allow a greater metal density to be laid down (and thus greater opacity) than might otherwise have been expected.
- A useful form of coating formulation, though not exclusive, when gravure coating the intermediate spacer layer consists of 30-70% filler particles (preferably 1 -3 x10⁻⁶m (1-3 micron) diameter spherical particles), a heat seal binding polymer to provide adhesion and some softening and release polymers (such as soft polymers and waxes) again to promote adhesion and to facilitate release of coating from small coating cells.
- The use of a soft micro roughened spacer layer provides some cushioning and movement to take up bending stresses to reduce cracking of the metal layers.
- The invention in some part relies on the recognition that a suitable micro roughened spacer layer useful for forming a high efficiency diffuser as the structural variations are near the dimensions of the wavelength of light consists of a dry coating layer about 0.2 to 1.2 x10⁻⁶m (0.2-1.2 microns) thick containing binder polymer plus filler particles, preferably spherical, of a size typically 1.0 - 3.5 x10⁻⁶m (1.0-3.5 microns) and hence typically standing proud of the surface provides a particularly goods diffuser plus the recognition that gravure coating rollers whose pitch is 11811 lines per metre (300 lines / inch) to 39370+ lines per metre (1000+ lines / inch) (typically 19685+ lines per metre (500 lines / inch)) provides a suitable diffusing pattern.
- The invention in some parts relies on the recognition that in contrast to standard coating processes where gradual drying is usually the aim to allow flow and a smoother coating, in this mechanism we rely on the fact that an unusually rapid application and very rapid drying of the coating (nearly instant if possible) effectively freezes into the coated pattern upon drying a retained moulding of the gravure roller to provided a micro roughened surface pattern which is then metallised to form the secondary metal diffusing surface relief. Effectively this fast drying technique together with a high filler content thixotropic coating mixture enables the coated surface to retain an embossed or moulded pattern of the gravure roller.
- In some areas, though not exclusively, this work specifically relies on the recognition that powerful optical diffusers can be formed by thin layers of coatings with high filler content, say if for example the filler size is 2 x10⁻⁶m (2 microns) and the coating average thickness is 0.5 x10⁻⁶m (0.5 micron) then the average depth of fine structure variations in the coating will be 1 - 2 x10⁻⁶m (1-2 microns), correct to form a very efficient optical scatterer / diffuser, with larger features being formed by agglomeration of material centred on the pattern depressions of the original gravure application roller - this gives structures with useful properties.
- A concept inherent within this invention is that the additional light blocking capability of the diffusing structure comes from its diffusing nature where the spacer layer acts effectively as a surface relief profile generator upon which the metallised surface relief is formed - it is specifically anticipated that the spacer coating does no appreciable light absorption and is essentially clear - the essential mechanism of increased opacity is both high diffusion of the micro roughened metal surface increasing opacity and the micro roughened surface increasing metallisation density and imparting some resistance of the metallic film to bending.

Usefully the micro roughening on the diffusing second metal surface also increases the average density of metallization for a given metallization film thickness and therefore the optical density, the spacer layer can also optionally be chosen to have a high retention for incident metal vapour during vacuum coating to increase the metal density applied in a pass and to reduce pinholes. This is particularly useful when applied to say clear barrier coatings for gas barriers such as AlOx.

It is also an object of this present invention to provide an improved low light transmission flexible material consisting of two reflective surfaces each containing a surface relief micro-structure or micro optic structure and coated with a reflective material (such as aluminium or other metallic reflector) separated by a flexible bonding layer to create a composite material of improved light opacity and improved resistance to flexing and improved resistance to cracking under flexing of the film or composite structure.

The twin reflective surface relief structure is chosen because the additional surface relief micro-structure serves to increase opacity by preferably diffusing or diffracting incident or transmitted light, thus reducing the directly transmitted flux and so increasing the light blocking ability. Additionally pinholes in the film tend to run perpendicular to the film surface so for a structure surface the pinholes do not propagate light in the direction of an observer but serve to diffuse any transmitted light into the interlayer gap where it can undergo multiple internal reflections and be trapped more effectively. Additionally with a micro structured / micro roughened diffusing surface the surface area is increased very significantly over a planar surface (say by 20 -35%) such that for any given aluminium film vacuum metallised thickness the actual areal aluminium (or other opaque metal or non metallic barrier film material) is significantly increased leading to a significantly increased optical density compared to a planar metallised layer so hence the light or gas blocking ability of the metal (or barrier) layer is be increased. Typically aluminium would be used, but other metals could be used and for transparent barrier layer transparent coatings such as AlOx can be used.

A particularly suitable form of diffusing structure envisaged for use is a new class of micro optic diffusing structure formed by gravure coating and gravure printing from specialist fine patterned rollers using specialist coating formulations designed to maintain their structure when applied to a material, wherein the average thickness of the micro optic diffusing coating lies between 0.2 and 1.2 x10⁻⁶m (0.2-1.2 micron) with the optical properties being controlled by both the gravure roller cell geometry and pitch and the chemistry of the coating solution , particularly the filler size of the material (usefully about 2x the average coating thickness to provide some roughness and diffusion and minimise spread of coating liquid before drying).

Usefully these structures are coated by being run at very high speeds and dried very quickly (full temperature on first ovens) to retain the shape of the coating cylinder cells and lines - effectively using this as a moulding tool. Optionally though usefully the coating solutions contain a wax to promote easy cylinder release, a high solids content to promote fast drying and a high filler content (typically of a large size of a few 10⁻⁶m (microns)) again to promote drying and roughen and diffuse the final surface plus a polymer binding agent. For example, a typical spacer layer formulation suitable for gravure coating diffuser structure of this pattern and for subsequent use in a scratch off application could consist of a high proportion (e.g. 25-50%) of filler to provide the diffusion and softness required with a typical size scale of 0.7 - 3.0 µm diameter (eg Aluminium trioxide particles, titanium dioxide, calcium carbonate or inert fillers such as ceramics), mixed with a soft polymer for example formulated from standard polymer heat activated materials, rubbers and waxes - given here as one of many possible methods. It may be appreciated that other formulation types may also be used to achieve the realisation. This coating surface can subsequently be metallised - aluminium is a typical coating for light barriers. For gas barriers aluminium or clear AlOx or similar can be used. Usefully the surface character of the coating that makes it soft and easily mouldable also makes it retentive during the metallization process allowing a relatively thick metallised layer to be deposited. The resulting surface after metallisation forms an extremely effective 'white effect' metallised diffuser whose diffusion angle effectively depends on the thickness of the coatings and pitch of the coating rollers being used - generally smaller pitched rollers provide finer diffusing and thus white structures, gravure roller pitches typically in the region 11811 lines per metre (300 lines / inch) to 39370+ lines per metre (1000+ lines / inch) can be used depending on the structure requirement.

A particularly advantageous use envisaged for this new micro-diffuser technology is to create new very high opacity scratch off foil structures for the phone-card recharge market where the scratch off foil, be it holographic or printed, is the main data protection device against unauthorised access to the PIN number. In this situation the scratch off foil has to be proof against various number-reading techniques including optical transmission number access via high intensity light transmission and against bending of the foil in an attempt to crack the foil coatings and enable easier PIN number visualisation by light transmission using intense light sources.

In practical use to form the type of new very high opacity scratch off foil structures of interest here the structure would be created as the following process applicable for a holographic scratch off foil ....
i. A holographic or diffractive hot stamping foil (consisting of a PET carrier, wax release layer, embossing lacquer and embossed surface relief holographic pattern) would be metallised generally with aluminium. This can be run in several passes to build up the aluminium density as needed. In the case of a printed scratch off foil this layer would simply contain print.
ii. Rather than apply the scratch off adhesive directly at this point as in a normal process, the new high opacity structure is created by forming a thin spacer coating incorporating a micro optic surface relief diffusing structure on this exposed aluminium coating. This is done by a gravure coating technique as described above, namely by gravure coating and gravure printing a micro-roughened coating that forms an excellent diffuser when metallised from a specialist fine patterned roller, typically 13779 dot per metre (350 dot / inch) or finer, using specialist coating formulations designed to maintain their structure when applied to a material, wherein the average thickness of the micro optic diffusing coating lies between 0.2 and 1.1 x10⁻⁶m (0.2-1.1 micron) with the optical properties being controlled by both the roller cell geometry and pitch and the chemistry of the coating solution , particularly the filler size of the material (usefully about 2x the average coating thickness to provide some roughness and diffusion and minimise spread of coating liquid before drying). Usefully these structures are coated by being run at very high speeds and dried very quickly (full temperature on first ovens) to retain the shape of the coating cylinder cells and lines - effectively using this as a moulding tool. Optionally though usefully the coating solutions contain a wax to promote easy cylinder release, a high solids content to promote fast drying and a high filler content (typically of a large size of a few 10⁻⁶m (microns)) again to promote drying and roughen and diffuse the final surface plus a polymer binding agent. This spacer layer then contains a surface relief micro rough structure for subsequent metallization.
iii. The structure is then re-metallised with the aluminium (or similar) being applied to the microscopically rough coating of the spacer layer structure. The metallization goes on top of or over the microscopic roughness of the spacer layer to follow the spacer layer surface relief - the spacer layer micro roughness being created both by the size of the filler particles which individually should be larger than the average coating thickness - for example 2 x10⁻⁶m (2 micron) filler on a 0.5 to 1 µm coating to provide a microscopic level of surface roughness), the pitch and pattern of the gravure coating roller and the specific technique of rapidly drying he coatings to 'freeze' the coating pattern. The out turn of this metallization process is that the metallised surface so produced , generally aluminium, formed on the spacer layer thus forms a metallic surface relief structure whose topography is an exact copy or cast of the micro roughness of the spacer layer at the micron (10⁻⁶m) and sub micron level - this gives a structure that has a very high degree of random micro-roughness and thus appears to be an extremely efficient diffuser - this structure visually by eye will appear near white under illumination due to its diffusing properties.
iv. At this point the high opacity structure has been created as the bi metal layer, consisting of a top metal layer (potentially underlying a scratch off foil or a holographic pattern) plus micro diffusing spacer layer that acts as a highly efficient light blocking layer due to a number of useful properties some of which are novel ; ....the diffusing nature of the spacer layer and second micro diffusing metallised layer in themselves are more opaque to transmission than a planar metal surface as any transmitted light is also diffused so adding to the opacity ; the micro roughed nature of the micro diffusing surface means that the average metal density for any given thickness of aluminium coating is significantly enhanced over a planar surface and thus the optical density is significantly enhanced, furthermore the softer nature of the spacer layer and the thinner nature of the aluminium films involved tends to make the overall structure more resilient to bending without the metal films cracking, and finally the use of two metal layers, with a dissimilar and high metal adhesion spacer layer used to eliminate pinholes within the structure as they do not align and the spacer layer can be chosen to have a good receptivity for the metal in vacuum to ensure a pinhole free film. Thus the light blocking capabilities of these new structures are significantly greater than those achieved previously. Another advantage of the intermediate diffractive or diffusing structure is that the micro-roughened surface actually de-planarises the aluminium films which itself leads to far better resistance to bending before cracking occurs.
v. The final stage in creating a scratch off foil suitable for hot stamping is to coat the side of the structure to be transferred to the card, in this case the additional diffusing metallised layer, with a suitable soft heat seal adhesive designed for the twin roles of heat activating to adhere the transfer foil to the cards substrate and also designed to be soft enough to be removed easily by gentle scratching to reveal the PIN number. This final adhesives layer is relatively thick typically at approximately several microns (10⁻⁶m).

The process above provides a very high efficiency diffusing structure with good optical density and additional optical density provided by diffusion.

Note that the same principle can be used to build up a very high opacity scratch label for phonecard POIN protection usage which can be manufactured by either transferring the above scratch off hot stamping foil to a self adhesive label substrate by heat transfer or lamination or by building the structure up in reverse starting by coating the layer (v) on a self adhesive substrate and finishing off by transferring an uncoated holographic or printed foil or by coating and casting a hologram directly into the material. This bulk self adhesive scratch off label substrate material would then be die cut and slit to give the scratch off label format suitable for application to phone cards to protect PIN numbers and would be applied on personalisation lines. So such structures could also be used to provide high opacity holographic or white printed scratch off labels - in which case the carrier layer above would be absent and the lower scratch off layer would be adhered to a frangible self adhesive substrate layer. In usage the scratch off label would be applied over the PIN number and the scratch off foil layer removed by abrasion to reveal the PIN number through the transparent self adhesive label base.

Note that additional intermediate diffusers can be used (for example a 2, 3 or 4, ... metallised diffuser type system) where greater light blocking and flexibility resistance is required for example in potential technical applications for very high efficiency gas barriers e.g. ink reservoirs for inkjet systems.

Note that the process (i) through (v) for a light barrier layer assumes in this case manufacture of the micro roughened diffusing surface by means of a coating process. The micro roughened diffusing surface could also be manufactured instead using a moulding or casting process probably by moulding a surface relief pattern from an embossing shim into a (typically) UV light curable layer applied to the metal surface - the moulding could then by cured in situ (actually on the moulding roller say by means of using a transparent roller) or cured away from the moulding head. This process would thus provide an equivalent structure to the one envisaged using a UV cured moulding technique between the metallised layers by moulding either a random diffuser as per the gravure case or by moulding a diffractive structure as per the UV cured case.

So an alternative secondary method of producing the micro-patterned surface is to take for example a metallised holographic or printed surface, as formed as a hot stamping foil, coat it with a UV curable lacquer and impress into the UV curable lacquer either a micro diffuser or diffractive surface relief structure before curing the UV lacquer in situ or rapidly post embossing.

An interesting application of this same principle is to extend this process to gas barrier coatings - for example as used in the food industry to stop oxygen and moisture reaching products to extend shelf life and food freshness (where both clear dielectric layers such as aluminium oxide are used as well as pure standard aluminium). So this work would envisage an improved barrier coating with improved resistance to pinholes, flexing and improved barrier characteristics to consist of a standard single layer coating backed by a soft diffusing surface relief coating (e.g. as described above comprising a binder (such as an adhesive) and filler particles) and then a second dielectric or metallic coating. The work could also be extended to cover additional metallic or dielectric micro-roughened layers and spacer layers to form a multi layer stack for very high performance barriers. Although the micro -roughening of the diffuser type surface relief is not so relevant for barrier coatings such a structure actually has big advantages because it de-planarises the metallic / dielectric layers making them far less susceptible to cracking under bending and also increasing their area density.

An interesting potential method is to form these new barrier structures directly in vacuum. This would apply both to light barrier structures and gas barrier structures. So for example a first metallised or dielectric layer would be applied to a film, for a barrier coating, or a holographic hot stamping foil for a scratch off foil coating. The micro roughened diffuser layer (or regular patterned micro layer such as a diffraction grating) would then be applied in vacuum say using an acrylate with a patterned gravure coating or embossing roller, the acrylate would be UV cured, and then the second metal layer or dielectric layer would be applied on the micro roughened surface to provide the structure. If necessary the method could be repeated for lower permeability light barrier or gas barrier coatings. This provides the possibility of using a two evaporator metalliser with a suitable intermediate coating and UV curing station to produce the enhanced light barrier or gas barrier coatings in one pass.

In a further embodiment of this concept coloured or dark holographic scratch foil can be manufactured. So for example the first holographic layer is either partially metallised with Al, to low optical density say 0.2-0.4, the pattern metallised (e.g. by a chemical de-metallisation process or spot metallization) or HRI coated with Zinc sulphide for example to give a semi transparent holographic layer. The coated spacer layer is run behind this semi-transparent layer, altered to have a high black content or high colour content and then the structure is re-metallised. This gives a transparent hologram on a coloured or dark background with an efficient opaque diffusing aluminium layer underneath. Optionally a second spacer layer and second aluminium layer may be added to further increase the opacity to high levels and then a final coating or multiple coatings of scratch off adhesive applied.

Embodiments of the invention are to be described below with reference to the accompanying figures.

The scratch-off layer is formed to have a free surface having a 'micro-rough' or micro-structured' surface topography. In other words the surface topography is arranged whereby the layer acts as a diffuser of light that is incident thereon thereby to increase an opacity of the overall layer.

In some embodiments the scratch-off layer is provided by a layer of a soft material containing particles of a filler material.

In some embodiments the particles of filler material are arranged to provide the micro-rough surface topography. In some embodiments the particles of filler material have a diameter in the range of from around 0.25 x10⁻⁶m (0.25 micron) to around 2.5 x10⁻⁶m (2.5 microns).

In some embodiments the particles are arranged to provide a layer having an RMS (root mean square) surface roughness in the range of from around 0.2 x10⁻⁶m (0.2 microns) to around 4 x10⁻⁶m (4 microns), preferably from around 0.2 x10⁻⁶m (0.2 micron) to around 2.5 x10⁻⁶m (2.5 microns).

The scratch-off layer is provided with a first metallic layer thereover, the metallic layer being substantially opaque to visible light. It is to be understood that the surface of the first metallic layer is arranged to conform substantially to the surface topography of the scratch-off layer. The first metallic layer is sufficiently thin that a free surface of the first metallic layer following formation of the layer has a similar roughness to the surface of the first metallic layer that is in contact with the scratch-off layer. A diffuser layer is provided over the first metallic layer. The surface of the diffuser layer in contact with the first metallic layer conforms substantially to the shape of the first metallic layer, the diffuser layer being arranged to diffuse light incident on that surface. Finally, in the embodiment a second metallic layer is formed over the diffuser layer, the second metallic layer in turn having a holographic lacquer layer formed thereon. The holographic lacquer layer is embossed to form a holographic surface structure that is visible to a user of the scratch-card structure. It is understood that these new scratch off structures differ from previous structures in that (i) the structure is provided with two metallic layers spaced apart from one another, and (ii) one of the metallic layers has a micro-rough surface.

### - Description of a new form of high efficiency optical diffusers

....This part of the invention is applicable to a new form of highly efficient optical diffusing manufacture of highly efficient diffusing structures using high volume potentially low unit cost reel to reel coating and metallising techniques.

The diffusing films may be patterned and may be made into directional diffusers to form a new class of lower cost mass manufacturable optically variable devices.

The part of the patent deals with applications of such structures to form optically variable and pseudo printed laminated foils and scratch off foils made by printing and coating techniques. This is expanded upon below.

This invention relates to a new class of micro optic diffusing structures formed by gravure coating and gravure printing from specialist fine patterned rollers using specialist coating formulations designed to maintain their structure when applied to a material, wherein the average thickness of the micro optic diffusing coating lies between 0.2 and 1.3 x10⁻⁶m (0.2-1.3 micron) with the optical properties being controlled by both the roller cell geometry and pitch, and the chemistry of the coating solution, particularly the filler size of the material (usefully about 2 x the average coating thickness to provide some roughness and diffusion and minimise spread of coating liquid before drying. Usefully these structures are coated by being run at very high speeds and dried very quickly (full temperature on first ovens) to retain the shape of the coating cylinder cells and lines - effectively using this as a moulding tool. Optionally though usefully the coating solutions contains a high solids content to promote fast drying and a high filler content (typically of a large size of a few microns) again to promote drying and roughen and diffuse the final surface plus a polymer binding agent.

The coating surface can optionally subsequently be metallised - aluminium is a typical coating. Usefully the surface character of the coating that makes it soft and easily mouldable also makes it retentive to aluminium during the metallization process allowing a relatively thick aluminium layer to be deposited. The resulting surface after metallisation can form an effective 'white metallised diffuser' whose diffusion angle effectively depends on the thickness of the coatings and pitch of the coating rollers being used - generally smaller pitched rollers provide finer diffusing and thus white structures, gravure roller pitches typically in the region 11811 lines per metre (300 lines / inch) to 39370 lines per metre (1000 lines / inch) can be used depending on the structure requirement.

The printed diffusers can be made self reflective without metallisation by the incorporation of a metallic or reflective filler into the coating solution allowing for example the production directly of spot metallised optically variable structures. This is not as optically efficient as direct metallization, which is preferred for high efficiency structures but does provide the capability for spot application of optically variable (OV) metallic structures useful for example on security papers and with security print.

It can also be appreciated that gravure coating and printed rollers can be patterned - e.g. to form text or security line-work patterns such as guilloche. This technique thus provides the opportunity to print down white or coloured text within a coating and then metallise to give a matt white text or artwork pattern on a metallic background with an enhanced reflective diffusion on the text - providing a noticeably differentiated visual effect. This effect can be useful in for example customising simple security foils or data protection scratch off foils, where for example a generic diffraction pattern holographic foil can be customised by taking the non metallised foil, over printing by printing some a thin diffusing pattern and then subsequently metallising to provide a holographic pattern plus bright white holographic style micro-print.

It is also possible to use different patterns on the coating rollers to form the original micro diffuser pattern to provide different effects. For example if the coating roller uses line grooves (rather than dot cells on a uniform pitch) then a directional diffuser will be produced where there is more reflectivity looking across the grooves than along them after metallization , thus this property can be used to provide a directional white diffuser. This directionality micro diffuser possibility also offers useful prospects for simple low cost optically variable security image patterning when combined with patterned rollers - this means that different areas can be made to selectively diffuse at different replay or rotation angles according to the rotation angles of the line structure after subsequent metallization - for example to provide a 90 degree image switch on viewing or a rotating pattern on rotation of the device. This enables graphic patterns of micro diffusers to be produced that replay with different intensities by reflecting incident light at different angles - thus providing for a low cost method of manufacturing a new low cost optically variable structure.

A useful sub-set of the technique is to provide optically switching images by splitting two or more images into sets of interlocking pixels or fine lines (generally too small to see) containing the different image elements - so for example an area whose image switched between two different images on 90 degree rotation would actually consist on a small scale of each of the separate images written into a particular set of interlocking pixels or lines structures where the different pixels relating to different images actually contained in line gravure structures of different or even 90 degree rotated, orientations to provide an image switch or movement or rotation effect which would become apparent after metallization. It can be deduced that many other optically variable or apparent motion effects can also be made using this technique simply by using the micro-mirror structure created from the metallised gravure structures.

A useful application of such structures is in manufacturing a new form of printed scratch off foil. In this process a plain hot stamping foil, or release coated film, would be printed with a patterned diffuser, optionally containing optically variable micro-optic structures. This would then be metallised, generally with aluminium, as an opacifying layer. The foil would then be returned for wet coating with suitable soft and frangible heat seal adhesive to provide scratch off characteristics before final slitting.

The structure thus produced will look completely different to any other form of printed scratch off foil - the image will consist of bright white coloured diffusing areas of 'print' and 'patterns' on a plain metallic background. Additionally the areas of white diffuser will tend to scatter transmitted and reflected light and so increase the opacity of the applied scratch off foil to read through number access and to obscure any indent of numbers from view by direct reflection, which can be useful when scratch foils are applied to very smooth surface plastic cards (e.g. smooth plastic cards such as PVC or PET cards). Optionally the foil can also be printed with areas of coloured text or graphics to provide coloured diffusing effects.

This technique can also be used to form a new type of printed scratch off label wherein the holographic scratch off layer is carried on a transparent self adhesive label base to form a self adhesive label structure. This structure can be die cut and then slit as known in the labelling art to form a self adhesive label structure carrying a scratch off holographic layer on a transparent base. Such labels can be applied in the phone card field over the PIN numbers on phone cards to act as the data protection device wherein the PIN number is revealed by scratching off the layer of printed or holographic scratch off. It is also useful that such labels have a high opacity to prevent number read through using high intensity light sources.

This technique can also be used to customise or to add additional security to holographic scratch off foils used as data protection devices. There are a number of ways this can be achieved but a good method for this is to take an embossed but non-metallised holographic foil, gravure print a clear or semi clear(tinted) patterned coating of 0.5-1 micrometres thickness and dot or line pitch between 250 and 1000 lines / mm to provide the active structure after subsequent metallisation, generally with aluminium but other metals may be used. This active structure produced will then result in certain areas of the design which are unprinted being entirely holographic or diffractive in nature and certain areas of the design which have been overprinted containing no holographic replay (as this is index matched out) but containing a bright white diffusing structure. There are a number applications of this form of over print envisaged ...

In a further embodiment of the invention the printed patterned diffusers detailed above can be combined with the use of such diffusers as light barriers for their opacity enhancing properties.

This combination can produce an improved opacity novel printed or holographic scratch off foil consisting of and with properties as follows taken from part of this invention as above, namely ...
- preferably but not essentially a carrier and release layer consisting of a release coated PET or similar coated with a release layer such that the layer structure will hot or cold transfer to a substrate such as paper or plastic,
- A first layer consisting of an optional holographic emboss lacquer with an embossed holographic or diffractive image and a gravure or flexo transfer printed pattern of a discontinuous micro optic diffusing spacer layer (as below but patterned) printed in a discontinuous graphic pattern. An advantage of the patterned diffusing pattern (which may also be of coloured ink or inks depending on the number of workings) is that its surface roughness conceals underlying number indentation.
- A first metallised layer, usually but not essentially aluminium, formed on the optional holographic surface relief and the first printed micro optic diffuser forming a metallised visual diffractive image overlaid and obliterated in areas by a bright white patterned diffusing micro diffusing area formed in a suitable graphic or security pattern,
- A second continuous micro structured spacer layer created by forming a thin spacer coating incorporating a micro optic surface relief diffusing structure on this exposed aluminium coating. This is preferably but not essentially done by a gravure coating technique as described above, namely by gravure coating and gravure printing a micro-roughened coating that forms an excellent diffuser when metallised from a specialist fine patterned roller, typically 350 - 400 dot / inch or finer, using specialist coating formulations designed to maintain their structure when applied to a material, wherein the average thickness of the micro optic diffusing coating lies between 0.2 and 1.1 x10⁻⁶m (0.2-1.1 micron) with the optical properties being controlled by both the roller cell geometry and pitch and the chemistry of the coating solution , particularly the filler size of the material (usefully about 2x the average coating thickness to provide some roughness and diffusion and minimise spread of coating liquid before drying). Usefully these structures are coated by being run at very high speeds and dried very quickly (full temperature on first ovens) to retain the shape of the coating cylinder cells and lines - effectively using this as a moulding tool. Optionally though usefully the coating solutions contain a wax to promote easy cylinder release, a high solids content to promote fast drying and a high filler content (typically of a large size of a few microns (10⁻⁶m) again to promote drying and roughen and diffuse the final surface plus a polymer binding agent. This spacer layer then contains a surface relief micro rough structure for subsequent metallization.
- Thereafter follows the application of a second metallised layer - The structure is then vacuum metallised a second time with the aluminium (or similar) being applied to the microscopically rough coating of the spacer layer structure. The metallization goes on top of over the microscopic roughness of the spacer layer to follow the spacer layer surface relief - the spacer layer micro roughness being created by the size of the filler particles which individually should be larger than the average coating thickness - for example 2 x10⁻⁶m (2 micron) filler on a 0.5 to 1 µm coating to provide a microscopic level of surface roughness), the pitch and pattern of the gravure coating roller and the specific technique of rapidly drying the coatings to 'freeze' the coating pattern. The out turn of this metallization process is that the metallised surface so produced , generally aluminium, formed on the spacer layer thus forms a metallic surface relief structure whose topography is an exact copy or cast of the micro roughness of the spacer layer at the micron (10⁻⁶m) and sub-micron level - this gives a structure that had a very high degree of random micro roughness and thus appears to be an extremely efficient diffuser - this structure visually by eye will appear near white under illumination due to its diffusing properties and in transmission will be highly opaque.

- At this point the high opacity structure has been created as the bi metal layer, consisting of a top metal layer (potentially underlying a scratch off foil or a holographic pattern) plus the micro diffusing spacer layer acts as a highly efficient light blocking layer due to a number of useful properties some of which are novel; ....the diffusing nature of the spacer layer and second micro diffusing metallised layer in themselves are more opaque to transmission than a planar metal surface as any transmitted light is also diffused so adding to the opacity ; the micro roughened nature of the micro diffusing surface means that the average metal density for any given thickness of aluminium coating is significantly enhanced over a planar surface relief and thus the optical density is significantly enhanced, furthermore the softer nature of the spacer layer and the thinner nature of the aluminium films involved tends to make the overall structure more resilient to bending without the metal films cracking, and finally the use of two metal layers, with a dissimilar and high metal adhesion spacer layer used to eliminate pinholes within the structure as pinholes in respective metal layers are very unlikely to be aligned with one another and the spacer layer can be chosen to have a good receptivity for the metal in vacuum to ensure a pinhole free film. Thus the light blocking capabilities of these new structures are significantly greater than those achieved previously. Another advantage of the intermediate diffractive or diffusing structure is that the micro-roughened surface actually de-planarises the aluminium films which itself leads to far better resistance to bending before cracking occurs.
- The final stage in creating a scratch off foil suitable for hot stamping is to coat the side of the structure to be transferred to the card, in this case the additional diffusing metallised layer, with a suitable soft heat seal adhesive designed for the twin roles of heat activating to adhere the transfer foil to the card substrate and also designed to be soft enough to be removed easily by gentle scratching to reveal the PIN number. This final adhesive layer is relatively thick, typically around 7-10 x10⁻⁶m (7-10 microns).

In other embodiments such structures could also be used to provide high opacity holographic or white printed scratch off labels - in which case the carrier layer above would be absent and the lower scratch off layer would be adhered to a frangible self adhesive substrate layer.

### Further embodiments ....

There are a number of additional embodiments considered here as extensions to this technique to be read with the above....

In a further different embodiment of the invention this technique could be used to directly mould off a gravure press roller micro prism type of structure - typical scale size pitch of say 5-20 x10⁻⁶m (5-20 microns). Here this aspect of the invention relates to a new class of micro optic structure formed by gravure coating and gravure printing from specialist fine patterned rollers using specialist coating formulations designed to maintain their structure when applied to a material, for a 5-20 x10⁻⁶m (5-20 microns) pitch structure whose depth may need to vary by up to 5 x10⁻⁶m (5 microns) for appreciable effects one would consider using an amended coating thickness to suit the structures concerned say with average thickness of the micro optic diffusing coating lies between 2 and 7 x10⁻⁶m (2-7 microns) with the optical properties being controlled by both the roller cell geometry and pitch and the chemistry of the coating solution, particularly the filler size of the material (usefully about 2 x the average coating thickness to provide some roughness and diffusion and minimise spread of coating liquid before drying). Usefully these structures are coated by being run at very high speeds and dried very quickly (full temperature on first ovens) to retain the shape of the coating cylinder cells and lines - effectively using this as a moulding tool. Optionally though usefully the coating solutions contain a wax to promote easy cylinder release, a high solids content to promote fast drying and a high filler content (typically of a large size of a few microns (10⁻⁶m)) again to promote drying and roughen and diffuse the final surface plus a polymer binding agent.

Such micro optic structures can usefully be manufactured by diamond machining - an example would include asymmetric triangular structures with directional reflection - patterning and changing of the slope angle or azimuthal rotation angle of the linear structure will provide an optically variable structure that varies in imaged and optical replay on tilting and rotation of the device. This can be used for simple optically variable patterned rollers.

Any of the above diffusing patterns can be useful metallised as optically variable secure authentication structures.

However, in another embodiment any of the above the structures can usefully be left unmetallised for use in transmission as controlled direction or controlled angle transmission optical diffusers. In the case of optical diffusers it is often useful to increase the effectiveness of the device by forming a diffuser on each side of a clear material - this can be done by double passing the material or preferably by coating both sides of a material on one pass in a coating machine. The efficiency of a transmissive diffusing structure can also be enhanced by coating the surface of the structure with a high refractive index material such as zinc sulphide or titanium dioxide. Such material can usefully be used for controlled view angle and direction diffusers such as in diffusing elements for LCD display screens or televisions. In this market a useful form of structure is one in which much of the diffusing structure is random in pitch and variation to prevent moire patterns with the underlying pixel pattern. This can usefully be achieved when the diffusing structure relies on a random distribution of fine featured filler particles. To avoid any periodic structures the diffusers would be coated from gravure rollers of a randomised dot pitch pattern or from diamond turned micro optic structures whose periodicity had been randomised to eliminate periodic structures and so eliminate any moire effects when overlaid on each other or with a periodic pitched display screen.

In a further embodiment the roller pitch could be taken to a much finer scale to look at diffractive scale structures such as holograms and diffraction gratings to look to generate commercial quality embossing structures using a gravure coating / casting process effectively as a high volume, relatively low quality holographic embosser.

In this case the emboss characteristics would rely on the material being liquid when taking the surface relief (to enable the roller pattern to be filled as a casting tool at low pressure), relatively thixotropic to maintain its surface relief structure as it left the roller then being dried extremely quickly to freeze dry the embossed structure into the film. Because this process effectively runs on a liquid casting process followed by solvent drying rather than a heat softening process the materials flow and mould more easily allowing higher run speeds than traditional embossing. Useful materials for these lacquers to take up small fine microstructures will be high solids content structures to ensure minimal shrinkage during drying to maintain the diffractive profile (say 45-75% solids), and materials containing waxes to give a release from the roller.

In one embodiment the lacquer can usefully contain cross linking materials designed to trigger after drying and heat to provide a higher melt temperature, better physical stability and more solvent resistance to the final structure. In another useful embodiment the lacquer can be a 100% solids UV curable lacquer in which case rather than heat or air drying the embossed cast structure would be cured off to a solid immediately after being structurally formed by the embossing coating roller.

Most commercial UV casting systems today actually use a separate application UV curable lacquer and a separate emboss / casting station i.e. 2 stations. In this method a single head processing station is used to achieve the embossing rather than a two station system. For a holographic roller that may well be made of say embossed PET layers adhered to a cylinder it may not always be helpful or advisable to run the roller directly in the lacquer solution and doctor blade off the excess solution (though this is a good method to fill the coating cells). In one embodiment the emboss roller runs into the lacquer system and the doctor blade is replaced by a smooth soft doctor roller to reduce roller wear. In another embodiment a 3 transfer roller metering system can be used - a gravure roller runs in the coating solution , a rubber transfer roller that may be patterned to transfer only a certain patterned areas further (i.e. a flexo system) is used as an intermediate roller and then a holographically patterned roller is used as the final roller with the coating impressed into the holographic structure by the smooth transfer roller and transferred in turn onto the substrate by the holographic roller. This system has an advantage because by choice of holographic roller and patterned rubber transfer roller to be of the same repeat (i.e. diameter) and run off the same geared set then the selectively coated lacquer is automatically deposited in fixed register to the holographic pattern, without any need for separate coating heads or registration maintenance systems between heads. This system will work with both solvent dried casting systems and better fidelity UV cured lacquer systems and will allow the avoidance of coating lacquer on what can sometimes be uneven shim joins on holographic material.

### Figures

So it is an aim of one of the embodiments of the invention to provide a foil structure for a scratch card having increased opacity to visible light.

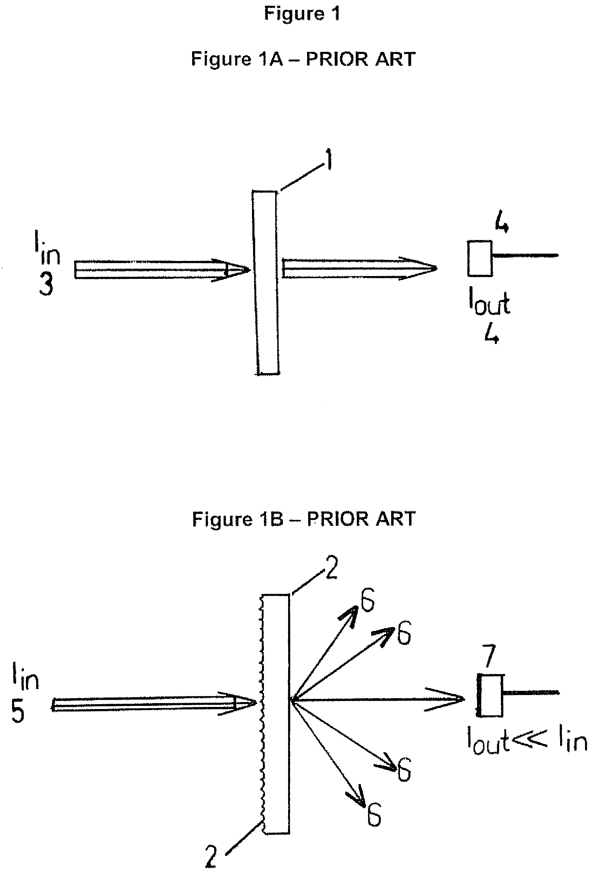

Embodiments of the invention are described with reference to the accompanying figures
**Figure 1** - Principal of enhanced transmission opacity by addition of diffusion / diffraction surface relief structure to a layer.
   This shows the operation of adding a diffusing optical microstructure to a sheet to reduce light transmission and so increase opacity. Figure 1A shows a beam of light l(in) 3 incident on a flat metallised sheet 1 - after some absorption the remaining unabsorbed light l(out) passes straight through to a detector 4. No scatter or diffusion occurs. Figure 1B illustrates the increase in opacity obtained by adding scatter or diffusion to the sheet - l(in) 5 impinges on a diffusing metallised sheet 2 and the transmitted light detected I (out) 7 consists of both the normal transmitted intensity minus the effect of scatter 6 which can be seen to significantly reduce the light transmission detected and thus increasing the apparent opacity of the sheet 2. This situation is exactly analogous to the effect of attempting to read a scratch card PIN number with transmitted light for example.

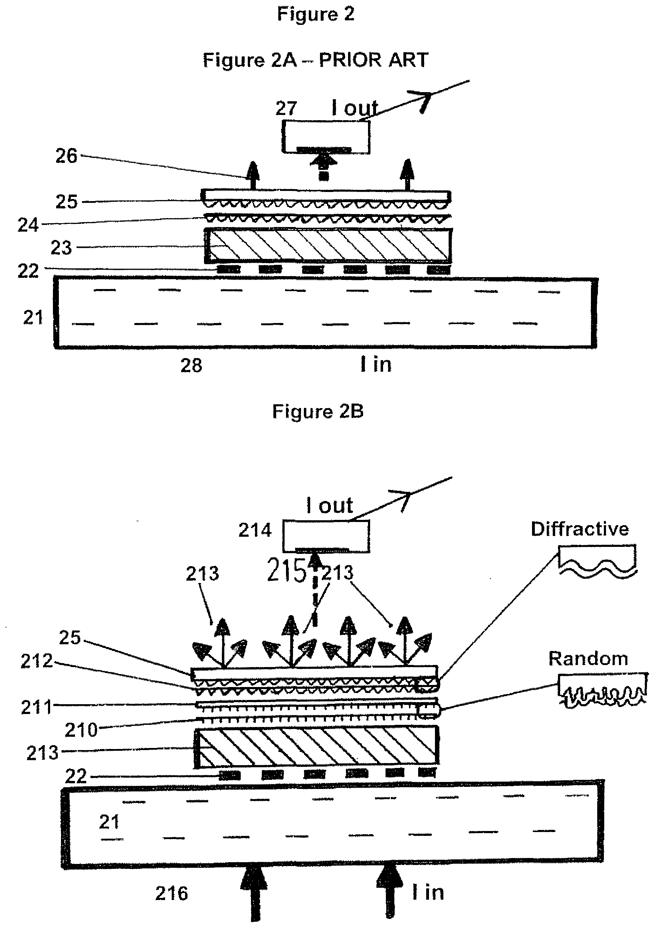

**Figure 2** - Structure and operation of new scratch card enhanced light barrier using micro optic diffuser ...Illustrates the application for scratch off foil and phone card PIN number protection.
**Figure 2A** shows both a conventional scratch off foil system as in 2A and an enhanced scratch off foil structure and operation as in 2B.
   Figure 2A shows a cross section of a conventional holographic or printed scratch off foil (23,24,25) applied over the PIN number 22 carried on a scratch card 21. The holographic scratch off foil (25,24,23) is usually transferred by heat and pressure as a stamping foil where the soft scratch off adhesive also acts as a heat seal adhesive (23). Under interrogation under strong back light (28) through the card (21) to shadow illuminate the PIN number (22) to visualise it in transmitted light on a detector (27). The only barrier to this form of shadow reading is the opacity of the holographic scratch off foil layer (23,24,25) to both absorb and scatter light flux using a single aluminised holographic or diffractive micro-structure. Typically the holographic scratch off foil will also carry a holographic security image on layer 25 as an anti counterfeit device. To access the PIN number 22 for usage of the card the scratch off foil and holographic image layer (23,24,25) is gently abraded away to reveal the PIN number 22.
**Figure 2B** - shows the enhanced opacity holographic or printed scratch off foil system on a scratch card protecting a PIN in operation under the same interrogation method ...
   Intense light 216 is shone from beneath a scratch card 21 to which an enhanced opacity holographic scratch off foil (213,210,211,212,25), made according to the teachings of this patent, has been applied. Transmitted light is collected at detector 214 to attempt to visualise a shadow of the PIN number. In additional to the metallised holographic layer diffusing and absorbing light there is also the new additional micro-structured metal layer 210 (a high efficiency optical diffuser typically) and an additional spacer layer 211 in accordance with these teachings the additional micro diffusing layer which serves to add both additional metal absorption and additional diffusion into any transmitted light. This new system thus dramatically reduces transmitted light thus rendering the PIN number invisible to light sources that would previously visualise PIN numbers protected by standard holographic or printed scratch off foils. As previously the various layer structures are designed to be relatively easy to remove by gentle abrasion to reveal the PIN number.

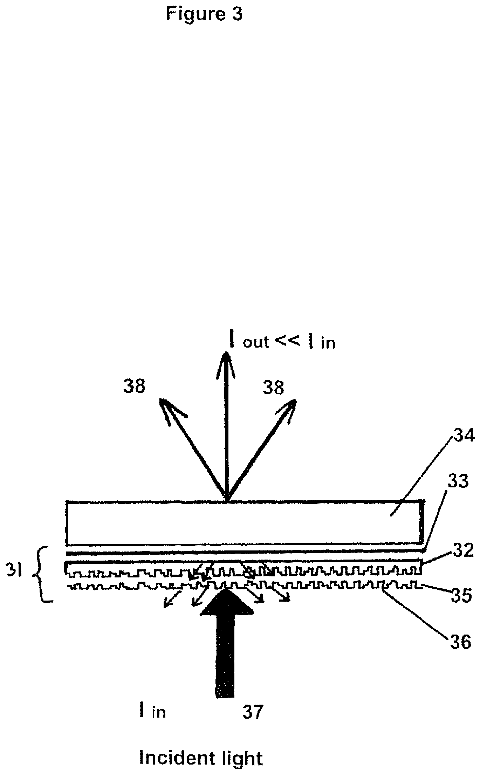

**Figure 3** - Structure of new improved light and gas barriers according to this invention and schematic diagram of operation.
   The new light and gas barrier 31 consists of a spacer layer 32, a planar metal layer or embossed and printed metal layer 33 , where the metal can be replaced with a dielectric such as AlOx for a gas barrier 33, a support layer 34, a second aluminium or AlOx layer 35 micro roughened as per the teaching of this patent to become both an improved absorber and diffuser which in the case of a metal light or gas barrier film gives a diffusing metal inner surface 36.
   So a dual metal / diffusing structure 33,32,36,35 acts as both an improved light and improved gas barrier. For certain gas barriers that require transparency e.g. in food applications, a transparent dielectric can replace the aluminised layer e.g. aluminium oxide. In this case the micro structuring adds flexibility and deplanarises the vacuum metallised layer to avoid cracking and add flexibility and to increase the density.

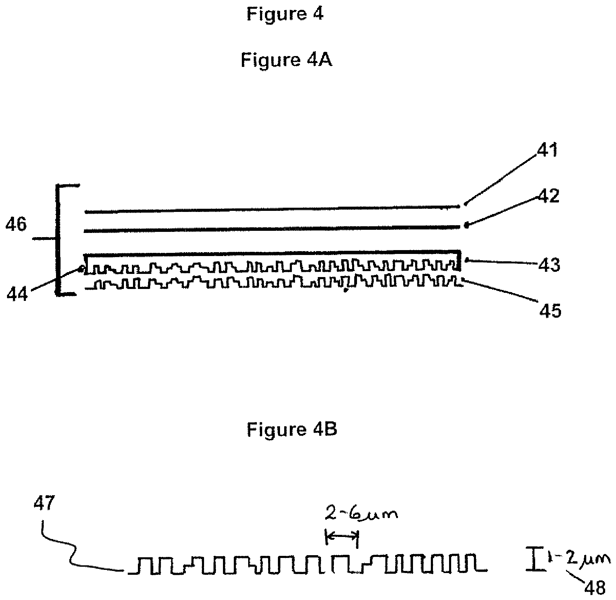

**Figure 4** - Structure of new high opacity holographic scratch off foil using new diffusing light barrier according to this invention.
**Figure 4A** shows the structure of the new light barrier and scale sizes according to this invention. 46 shows the composite light barrier consisting of ...........
   .....a top surface 41 of typically a holographic surface relief structure ,
   .....a metallization layer 42,
   ... potentially also / or a printed top structure also metallised or a printed structure printed and metallised, ..... a spacer layer containing fine structure scale size 0.2-1.3 um typically random if applied by a gravure coating process or typically ordered if applied by a holographic embossing process
   a second metal layer 45 forming a random micro rough (as above) efficient diffusing topology formed over the surface relief of the gravure coated layer.
   This shows how the gravure process can be used in a very specialised way to create a micro rough surface suitable for direct metallization to thence mould a second internal optically active diffusing micro structure suitable for forming an ultra high opacity multi layer device as per the teachings of this patent.
**Figure 4B** gives further details of the detailed microscopic surface topography 47 that may be formed by this specialist gravure coating method, namely a randomly micro-rough surface 48 of scale size average thickness 0.5-1 micrometres with fine structure from filler particles of size 0.2 - 2.3 micrometres on a 2-10 micrometres pitch 49 providing a highly efficient optical diffuser with an overlaid larger ordering structure of a gravure roller pattern of approximately 30um. For example, the roller pattern may comprise a dot pattern the dots having a diameter of around 30 micrometres and pitch of 70 micrometres configured as a gravure roller used in a direct gravure mode.

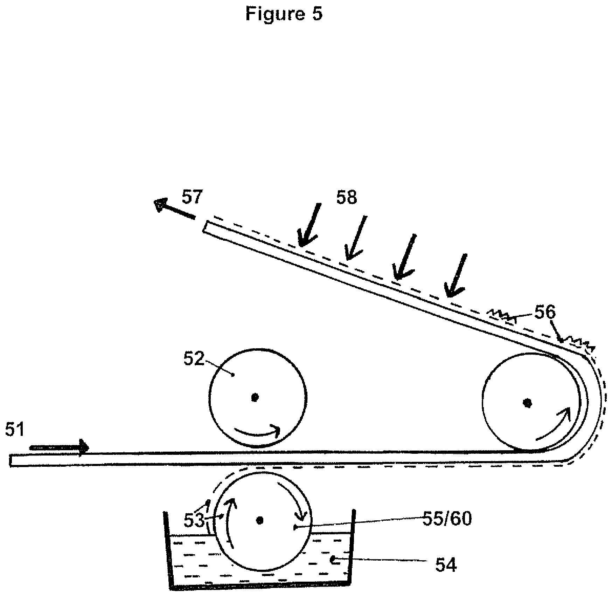

**Figure 5** - Explains and illustrates the manufacture by specialised coating of a micro optic spacer layer for a scratch off foil and a micro optic diffuser to create a micro diffusing surface by specialist coating techniques followed by metallization.
   Figure 5 shows a web 51 being gravure coated 53 at high speed with a thin coating (e.g. 400 dpi roller - 60 - running direct gravure mode 53, 54, 55) solution 54 containing a high filler content 58. The web is very rapidly dried at high speed 57 / 58 to essentially freeze the coating pattern in place and dry it rapidly to ensure the surface is as rough as possible, in comparison to conventional coating where the drying speed is adjusted to be slow to allow the coating to flow out and become smooth.

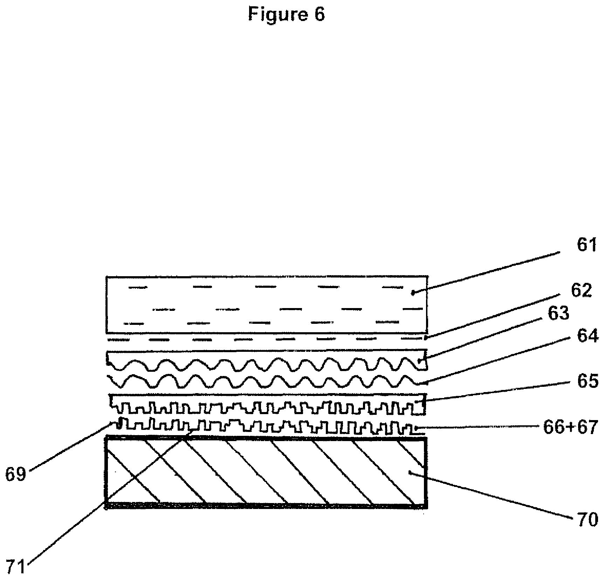

**Figure 6** - Shows a diagram of an enhanced opacity printed or holographic scratch off hot stamping foil structure made according to the teaching of this patent prior to application by transfer under heat and pressure off the PET carrier 61 to a scratch card.
   The holographic (or printed) scratch off foil structure consists of...
   - Carrier PET 61 to carrier transfer foil structure which releases under heat and pressure by melting of a wax release layer 62 as in conventional stamping foil technology.
   - Holographic diffractive surface relief layer 63 and image backed by first layer of aluminium metallization 64 to provide first part of opacity. This layer can also consist of a white diffusing effect patterned diffusing layer.
   - Spacer layer 65, 67 deposited typically but not essentially by an adapted rotogravure process with micro-rough features (thickness 0.2-1.3 micrometres on average, feature size 0.2 to 2.3 x10⁻⁶m (0.2-2.3 micron), topographically localised very rough lower surface at scale of light to make efficient diffuser when metallised.
   - Second metallised surface relief layer 69 formed over microscopically rough surface to form high efficiency optical diffuse layer 71 that forms second high opacity and high diffusion / high scatter layer to provide additional opacity and bending resistance.
   - Final layer 70 is one of several layers of soft scratch off heat seal adhesive or heat seal layers plus scratch off layers that can be activated to adhere transfer foil to scratch card. The scratch off heat seal is selected to be both heat activate-able to adhere the transfer foil structure to card and soft enough to be removable by gentle abrasion to reveal PIN number when required.

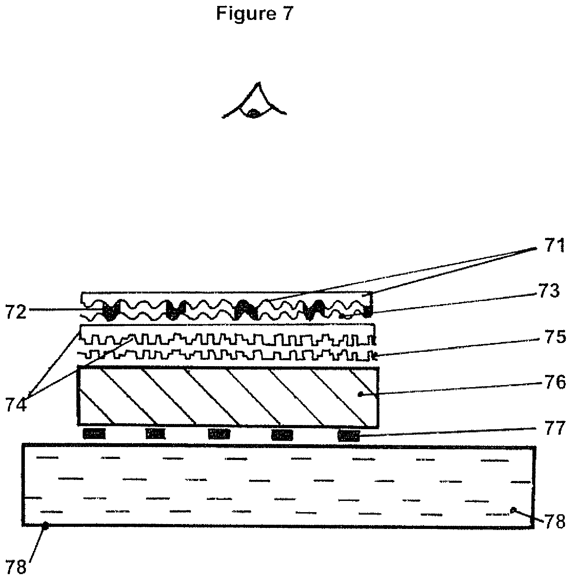

**Figure 7** - Enhanced opacity scratch off foil according to this invention after application to phone card / scratch card - schematic structure diagram of scratch off foil as applied.
   - Top surface is holographic image 71 and holographic diffractive surface relief layer 71 and image backed by first layer of aluminium metallization 73 to provide first part of opacity.
   - This layer can also consist of an alternative pattern printed micro rough surface 72 providing when metallised 73 white diffusing effect patterned diffusing layer 72.
   - Micro diffuser spacer layer 74 deposited typically but not essentially by an adapted rotogravure process with micro-rough features (thickness 0.2-1.3 micrometres on average, feature size 0.2 to 2.3 x10⁻⁶m (0.2-2.3 micron), topographically localised very rough lower surface at scale of light to make efficient diffuser when metallised.
   - Second metallised surface relief layer 75 formed over microscopically rough surface to form high efficiency optical diffuser 74 that forms second high opacity and high diffusion / high scatter layer to provide additional opacity and bending resistance.
   - Final layer 76 is one or several layers of soft scratch off heat seal adhesive or heat seal layers plus scratch off layers that can be activated to adhere transfer foil to scratch card. The scratch off heat seal is selected to be both heat activatable to adhere the transfer foil structure to card and soft enough to be removable by gentle abrasion to reveal PIN number when required.
   - PIN number on card 77 to be protected from visualisation before use or to be revealed by gentle abrasion at point of usage with fingernail or coin.
   - Main plastic or paper card body of phone card / scratch card 78 to carry PIN number and branding.

   It can also be appreciated that the same techniques for achieving high opacity can be applied to the use of scratch off labels and holographic scratch off labels.

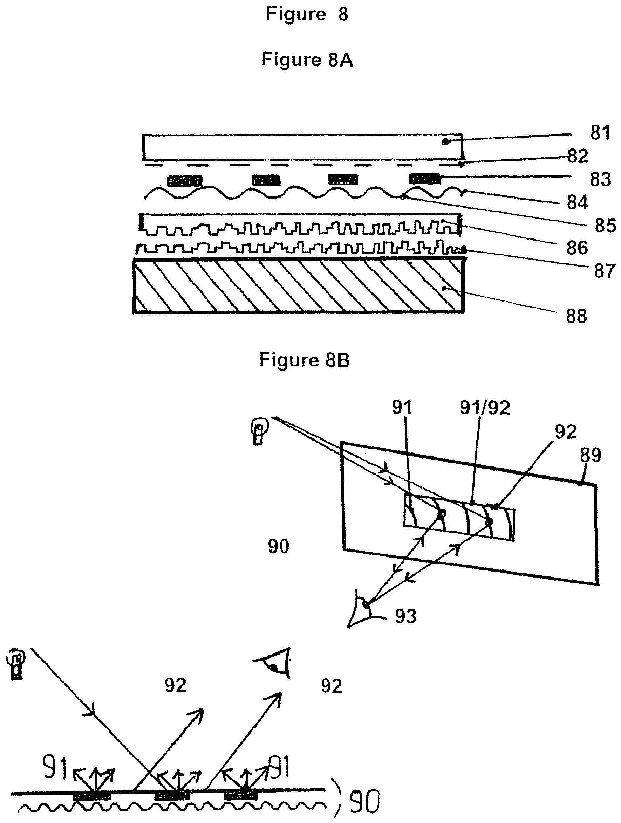

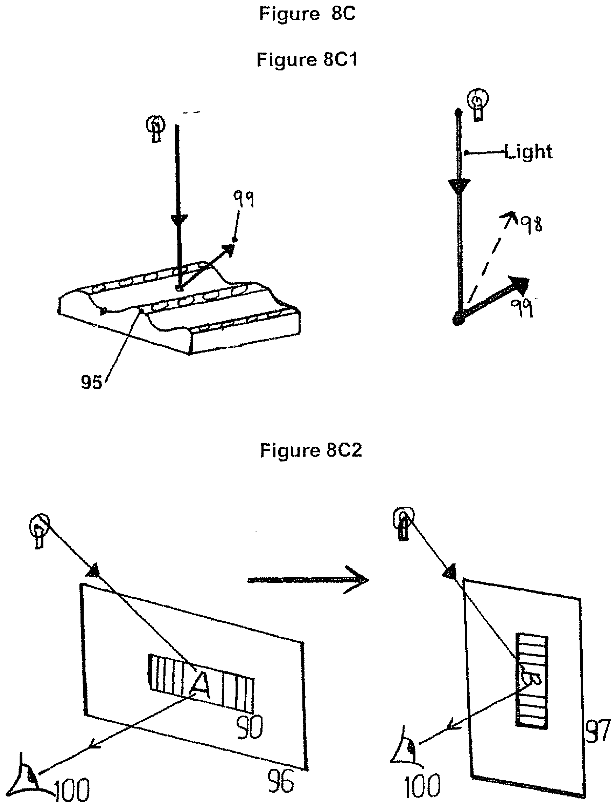

**Figure 8** - Diagram of patterned micro optic diffusers forming patterned white areas pattern as applied to a new type of printed scratch off foil.
**Figure 8A** **-** Structure of printed scratch off foil using micro optic printed diffusers for enhanced white patterning.
   The new white printed scratch off foil structure consists of...
   - Carrier PET 81 to carrier transfer foil structure which releases under heat and pressure by melting of a wax release layer 82 as in conventional stamping foil technology.
   - A white patterned diffusing layer 83 pattern printed.
   - First metal layer 84
   - Spacer layer optional 86 deposited typically but not essentially by an adapted rotogravure process with micro-rough features (thickness 0.2-1.3 x10⁻⁶m (0.2-2.3 microns) on average, feature size 0.2 to 2.3 x10⁻⁶m (0.2-2.3 micron), topographically localised very rough lower surface at scale of light to make efficient diffuser when metallised.
   - Second metallised surface relief layer 87 formed over microscopically rough surface to form high efficiency optical diffuser that forms second high opacity and high diffusion / high scatter layer to provide additional opacity and bending resistance.
   - Final scratch off layer 88 is one of several layers of soft scratch off heat seal adhesive or heat seal layers plus scratch off layers that can be activated to adhere transfer foil to scratch card. The scratch off heat seal is selected to be both heat activatable to adhere the transfer foil structure to card and soft enough to be removable by gentle abrasion to reveal PIN number when required.
**Figure 8B** - Visual effects of new structure 90, 89 for an observer 93 .... Diagram of micro optic diffuser forming patterned areas 90, 93 and concept of optically variable image switch potential 91, 92 by selective reflection directions by adjusting printing roller line pitch and directions.
   Applied printed / diffusing scratch off foil 90 forms areas of diffused white reflection 91 and areas of specular plain reflection 92 to give simple optically variable effects when laid down in an area 90 on a card 89 for an observer 93.
   This shows that the concept of printed white diffusing areas allied to plain mirror specular reflecting areas can provide useful new and visually unusual security effects.
**Figure 8C** - Illustrates the possibility of providing simple security image switches 96, 97 visible from different directions to an observer by aligning diffusing areas 95 and specular reflections 98, 99 along certain directions by aligning and varying the pitching of gravure roller cells 95 and lines used to apply the base coating before metallization.
   Figure 8C1 illustrates the coating microstructure produced from aligned gravure lines or dots.
   Figure 8C2 demonstrates images switches potentially possible as 96, 97 - different graphics visible to an observer 100 on rotation of document by 90 degrees to give simple image switch. Different reflection directions are obtained by different alignment directions and angles of gravure lines and cells to deposit materials with different line rotation angles,
**Figure 9** - Transmission diffuser application - example of use of micro optic diffusers in this invention in use as transmission diffusers and possible structures including two sided coating and HRI coating to enhance efficiency.

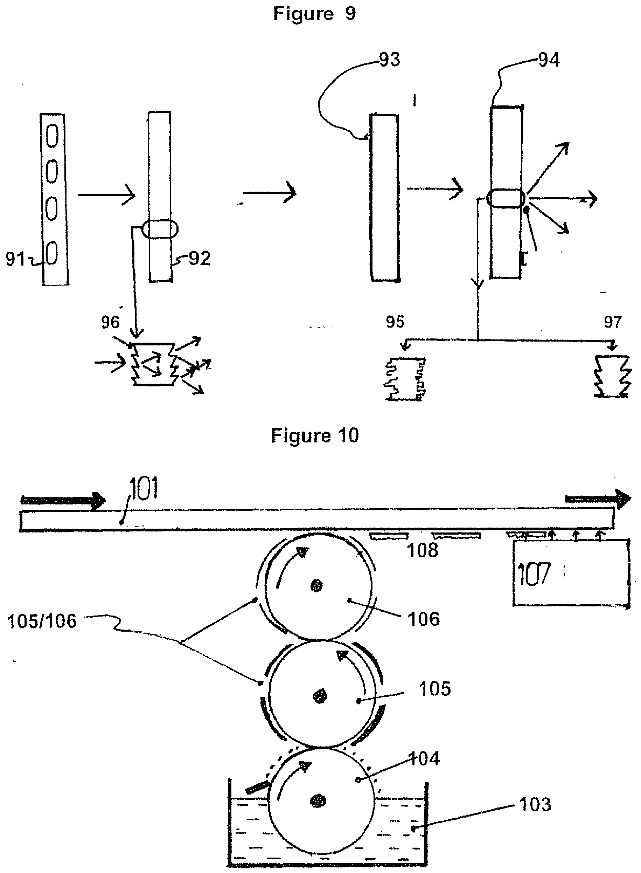

   Figure 9 shows an LCD assembly , a backlight 91, a high efficiency diffuser 92, an LCD panel 93 and a final de-pixelleting and view angle controlling diffuser 94.
   This shows one application of the efficient random high efficiency transmission diffusers that can be formed by gravure coating techniques is to form diffusers suitable for LCD application such as 94,95, 96, 97 where the efficiency has to be high but it is useful if the structure is random to prevent moire effects. In this case the diffuser can be made directional as in 95, 97.
**Figure 10** - Novel casting machine roller head layout for diffractive and printed micro optics using air and heat drying or UV curing.
   Method of registering coating to specific areas of application / casting roller using a transfer roller system locked in register to avoid the need to re-register between coating and casting heads.
   This shows a substrate web 101, passing a coating head 106 which is coated by a transfer roller assembly 104, 105 locked in relative register so that only selected spots on the web are coated. The final transfer roller contains then emboss pattern to selectively form coated or line areas on selected areas of the substrate. This could be for example a line structure or in certain applications be for example a simple holographic or diffractive structure.
   Immediately after application to the web the material transferred off the embossing roller 106 is set by either air drying or UV drying 107 to maintain a surface relief.
   In a further embodiment the coating solution itself 103 can contain reflective metal particles or flakes to immediately provide spot reflectivity to the applied pattern 108 to avoid the need for post metallization.

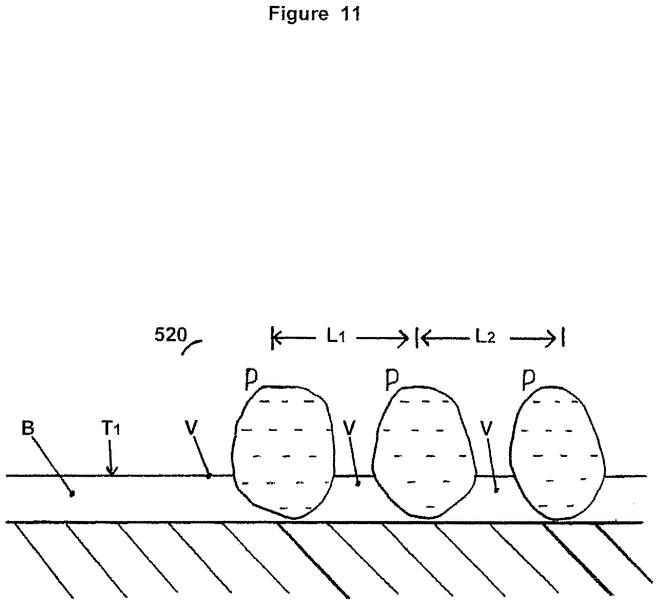

**Figure 11** shows a cross-sectional view of a structure according to an embodiment of the invention in which a layer of a spacer material 520 has been formed on a surface using a gravure printing process. The spacer layer 520 has been formed to have a micro-structured surface relief pattern (or 'surface relief microstructure'), in other words a surface relief that has a roughness on a scale of the order of the wavelength of light thereby to provide a surface that is an optical scatterer, preferably an efficient optical scatterer. The surface relief microstructure is thus optically effective (or 'optically active'). The surface relief microstructure has a surface modulation of transitions from peak regions P to valley regions V and from valley regions V to peak regions P. In at least one lateral direction of the surface area there is at least one transition from a peak region to a valley region or vice versa within every 20 x10⁻⁶m (20 microns). In some embodiments there is at least one such transition within every 15 x10⁻⁶m (15 microns) or less.

In some embodiments there is at least one such transition within every 10 x10⁻⁶m (10 microns). In some embodiments there is at least one such transition within every 5 x10⁻⁶m (5 microns).

In some embodiments the lateral arrangement of transitions is substantially periodic. In some embodiments the lateral arrangement of transitions is not periodic.

In some embodiments the peak regions lie substantially within a single plane. In some embodiments the valley regions additionally or instead lie substantially within a single plane. The plane may be defined by a surface of the binder B which may be an adhesive or other material as described above.

In some embodiments in at least one lateral direction of the surface area the average lateral distance between adjacent transitions from a peak region to a valley region or vice versa lies in the range from 0.2 x10⁻⁶m (0.2 micron) to 10 x10⁻⁶m (10 microns).

In some embodiments in at least one lateral direction of the surface area the average lateral distance between adjacent transitions from a peak region to a valley region or vice versa lies in the range from 0.2 x10⁻⁶m (0.2 micron) to 5 x10⁻⁶m (5 microns).

In some embodiments in at least one lateral direction of the surface area the average lateral distance between adjacent transitions from a peak region to a valley region or vice versa lies in the range from 0.2 x10⁻⁶m (0.2 micron) to 3.5 x10⁻⁶m (3.5 microns).

In some embodiments the surface relief microstructure has a local variation in thickness from a peak to a valley of the surface as viewed in cross-section in the range of around 0.2 to 3.5 x10⁻⁶m (0.2-3.5 microns). In other words, a peak of the surface relief microstructure is offset from a valley of the surface relief microstructure in a direction normal to a plane substantially parallel to the surface by an amount in the range of from around 0.2 to around 3.5 x10⁻⁶m (0.2-3.5 microns).

In the process used, rollers associated with the printing process were arranged to allow particles having a diameter of up to around 2 x10⁻⁶m (2 microns) to be deposited on the substrate, the particles being provided in a liquid matrix formed from a mixture of soft polymers such as polyurethane polymers, acrylic polymers and latex polymers.

It can be seen from figure 11 that the spacer layer 520 has a thickness t that typically varies in the range from around t1 between particles (a 'valley region', V) to around t2 where a particle is located (a 'peak region', P). Lateral spacings between particles are typically in the range of from around L1 to around L2.

In some embodiments t1 is in the range from around 0.2 x10⁻⁶m (0.2 micron) to around 0.7 x10⁻⁶m (0.7 micron), in some embodiments from around 0.3 to around 0.5 x10⁻⁶m (0.3-0.5 micron). In some embodiments t2 is up to around 2 x10⁻⁶m (2 microns), being the maximum diameter particle allowed to pass between rollers associated with the gravure printing process in some embodiments.

In some alternative embodiments t2 is up to around 3.5 x10⁻⁶m (3.5 microns).

Thus, in some embodiments the thickness t of the spacer layer varies in the range of from around 0.2 x10⁻⁶m (0.2 micron) to around 3.5 x10⁻⁶m (3.5 microns) as discussed above, preferably around 1 to around 3.5 x10⁻⁶m (1-3.5 microns).

Subsequently the spacer layer 520 of figure 11 may be coated with a barrier layer formed from a metal, typically aluminium, of a thickness thin enough so that the layer of metal itself has a surface relief pattern on both major surfaces that is similar to that of the spacer layer 520. Thus, the spacer layer acts as a 'mould' whereby the layer of metal assumes a shape complementary to that of the spacer layer. In other words the spacer layer provides a 'former' to shape the layer of metal. The metal layer may be considered to be the 'cast' of the spacer layer for this reason.

Other materials may be used to coat the spacer layer 520 such as metal oxide. The metal oxide may be a transparent metal oxide. A transparent metal oxide may be used for the first barrier layer and epi barrier layer in order to enable a transparent structure to be fabricated.

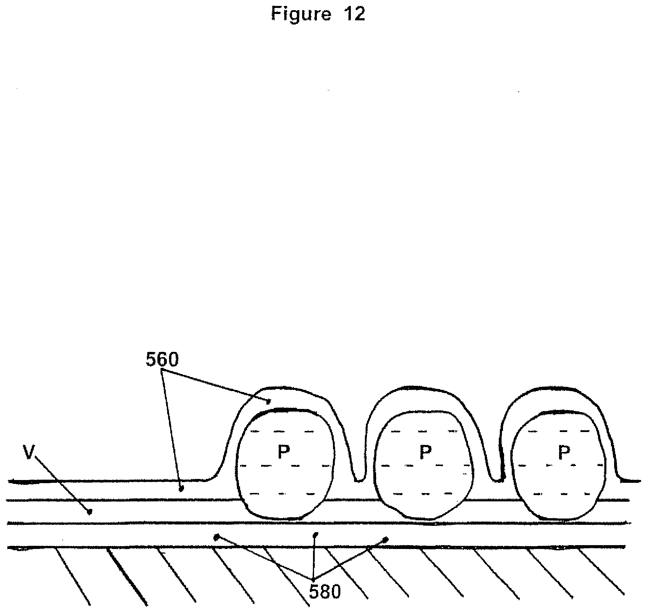

Figure 12 shows an embodiment in which the spacer layer 520 has been coated with a barrier layer 560 of metal or metal oxide (which may be a transparent metal oxide), the spacer layer having been formed on a further barrier layer 580 which again may be a metal or metal oxide (or combination thereof). The metal oxide may be a transparent metal oxide.

The further barrier layer 580 may also be provided with an optically active surface relief. The surface relief of the further barrier layer 580 may be a holographic surface relief formed for example by embossing a metal layer.

The further barrier layer 580 may itself by formed on a carrier such as a plastics film (e.g. PET) with optionally a release layer between the carrier and the further barrier layer 580.

A layer of scratch-off adhesive may be provided over the barrier layer 560 for attachment of the structure of figure 12 to a substrate such as a card (e.g. a scratch-card) thereby to protect confidential information from view until the structure is removed from the substrate by a scratching or generally scraping action.

In an alternative embodiment the structure of figure 12 is used as a substantially gas impermeable membrane for coating a substrate such as a foil for use in packaging (e.g. food packaging, electronics packaging).

By holographic structure is included reference to a structure arranged to provide a holographic or diffractive image by a process of optical diffraction when illuminated and viewed by a person.

## Claims

1. A structure comprising:
a template layer having a first surface having an optically active surface relief; and
an epibarrier layer provided over the first surface of the template layer, the epibarrier layer having an optically active surface relief corresponding substantially to that of the first surface of the template layer,
wherein the template layer comprises a plurality of particles arranged to span substantially an entire thickness of the template layer and to provide said optically active surface relief, wherein the template layer is formed over a first barrier layer,
**characterised in that** the first barrier layer is formed from a metal and is provided with an optically active surface relief, the optically active surface relief having optionally at least one selected from amongst a holographic surface relief, a non-holographic diffractive surface relief and a diffusive surface relief.

2. A structure as claimed in claim 1 wherein the epibarrier layer is formed from at least one selected from amongst a metal and a metal oxide.

3. A structure as claimed in claim 1 or claim 2 wherein the particles are bound to a binder material provided between the particles, the particles optionally comprising at least one selected from amongst a metal and a ceramic material, the ceramic material being optionally aluminium trioxide, titanium dioxide or calcium carbonate and wherein the binder is optionally a soft polymer, preferably an acrylate.

4. A structure as claimed in claim 3 wherein the binder layer has a thickness less than or substantially equal to half an average diameter of the particles when dry.

5. A structure as claimed in any preceding claim wherein the template layer has a surface relief having a local variation in height from a peak region to a valley region of the surface as viewed in cross-section in the range of from around 0.1 to around 5 x10⁻⁶m (0.1-5 microns), preferably around 2 x10⁻⁶m (2 microns), the surface relief further having a lateral spacing between respective adjacent peak regions or respective adjacent valley regions of from around 0.1 to around 5 x10⁻⁶m (0.1-5 microns), preferably around 2 x10⁻⁶m (2 microns).

6. A structure as claimed in any preceding claim wherein the average diameter of the particles is in the range from around 1 micron to around 5 microns, preferably from around 10⁻⁶m (1 micron) to around 3.5x10⁻⁶m (3.5 microns), more preferably around 2 x10⁻⁶m (2 microns).

7. A structure as claimed in any preceding claim wherein a layer of a scratch-off adhesive is provided over the epibarrier layer whereby the structure may be adhered to an article, the structure being optionally provided on a carrier.

8. An ultrahigh opacity holographic scratch-off foil comprising a structure as claimed in claim 7 wherein the optically active surface relief is a holographic surface relief and the first and epibarrier layers are each formed from a metal.

9. A substantially gas-impermeable structure comprising a structure as claimed in any preceding claim wherein optionally the first barrier layer and the epibarrier layer are formed respectively formed from one selected from amongst metal and metal, metal and metal oxide.

10. A method of forming a structure comprising:
forming a template layer having a first surface having an optically active surface relief; and
forming an epibarrier layer over the template layer, the epibarrier layer having a first surface having an optically active surface relief corresponding substantially to that of the template layer,
wherein the step of forming the template layer comprises depositing a formulation comprising a plurality of particles provided in a binder, the template layer being formed whereby the particles are arranged to span substantially an entire thickness of the template layer and to provide the optically active surface relief,
the method comprising forming the template layer over a first barrier layer,
**characterised in that** the method comprises forming the first barrier layer from a metal and providing the first barrier layer with an optically active surface relief, the optically active surface relief having optionally at least one selected from amongst a holographic surface relief, a non-holographic diffractive surface relief and a diffusive surface relief.

11. A method as claimed in claim 10 wherein the template layer is formed by means of a gravure coating process.

12. A method as claimed in claim 10 or claim 11 wherein the epibarrier layer is formed from at least one selected from amongst a metal and a metal oxide, the method optionally further comprising the step of embossing the first barrier layer thereby to provide the first barrier layer with an optically active surface relief, preferably a holographic surface relief.

13. A method of protecting information comprising the step of bonding a structure as claimed in claim 7, claim 8 or claim 9 as depending through claim 7 to a surface bearing confidential information by means of said scratch-off adhesive.

## Patentansprüche

1. Struktur, welche Folgendes umfasst:
eine Templatschicht mit einer ersten Oberfläche mit einem optisch aktiven Oberflächenrelief, und
einer Epibarrierenschicht, welche sich über der ersten Oberfläche der Templatschicht befindet, wobei die Epibarrierenschicht ein optisch aktives Oberflächenrelief aufweist, das im Wesentlichen dem Oberflächenrelief der ersten Oberfläche der Templatschicht entspricht,
wobei die Templatschicht eine Vielzahl von Partikeln umfasst, die so angeordnet sind, dass sie im Wesentlichen eine ganze Dicke der Templatschicht überspannen und dass sie das optisch aktive Oberflächenrelief bereitstellen, wobei die Templatschicht über einer ersten Barrierenschicht ausgebildet ist,
**dadurch gekennzeichnet, dass** die erste Barrierenschicht aus einem Metall ausgebildet ist und mit einem optisch aktiven Oberflächenrelief ausgestattet ist, wobei das optisch aktive Oberflächenrelief gegebenenfalls mindestens ein Oberflächenrelief, das aus einem holographischen Oberflächenrelief, einem nicht-holografischen diffraktiven Oberflächenrelief und einem diffusiven Oberflächenrelief ausgewählt wird, aufweist.

2. Struktur nach Anspruch 1, wobei die Epibarrierenschicht aus mindestens einem Stoff, der aus einem Metall oder einem Metalloxid ausgewählt wird, besteht.

3. Struktur nach Anspruch 1 oder Anspruch 2, wobei die Partikel an ein Bindemittel gebunden sind, das zwischen den Partikeln bereitgestellt wird, wobei die Partikel gegebenenfalls mindestens einen Stoff umfassen, der aus einem Metall und einem keramischen Material ausgewählt wird, besteht, wobei das keramische Material gegebenenfalls Aluminiumtrioxid, Titaniumdioxid oder Calciumcarbonat sein kann und wobei das Bindemittel gegebenenfalls ein weiches Polymer, bevorzugt ein Acrylat ist.

4. Struktur nach Anspruch 3, wobei die Bindemittelschicht eine Dicke aufweist, die weniger als oder im Wesentlichen gleich der Hälfte eines durchschnittlichen Durchmessers der Partikel ist, wenn diese trocken sind.

5. Struktur nach einem der vorangegangenen Ansprüche, wobei die Templatschicht ein Oberflächenrelief mit einer lokalen Variation der Höhe von einem Peak-Bereich bis zu einem Tal-Bereich der Oberfläche aufweist, wie im Querschnitt im Bereich von ungefähr 0,1 bis ungefähr 5 x 10⁻⁶ m (0,1 - 5 Mikron), bevorzugt ungefähr 2 x 10⁻⁶m (2 Mikron) gezeigt, wobei das Oberflächenrelief weiterhin einen seitlichen Abstand zwischen den jeweiligen angrenzenden Peak-Bereichen oder jeweiligen angrenzenden Tal-Bereichen von ungefähr 0,1 bis ungefähr 5 x 10⁻⁶ m (0,1 - 5 Mikron), bevorzugt ungefähr 2 x 10⁻⁶ m (2 Mikron) aufweist.

6. Struktur nach einem der vorangegangenen Ansprüche, wobei der durchschnittliche Durchmesser der Partikel im Bereich von ungefähr 1 Mikron bis ungefähr 5 Mikron, bevorzugt von ungefähr 10⁻⁶ m (1 Mikron) bis ungefähr 3,5 x 10⁻⁶ m (3,5 Mikron), noch bevorzugter von ungefähr 2 x 10⁻⁶ m (2 Mikron) liegt.

7. Struktur nach einem der vorangegangenen Ansprüche, wobei eine Schicht eines abkratzbaren Klebemittels über der Epibarrierenschicht bereitgestellt wird, wobei die Struktur an einem Artikel kleben kann, wobei die Struktur gegebenenfalls auf einem Träger bereitgestellt werden kann.

8. Eine holografische abkratzbare Folie mit ultrahoher Opazität, welche eine Struktur nach Anspruch 7 umfasst, wobei das optisch aktive Oberflächenrelief ein holografisches Oberflächenrelief ist und die erste Schicht und die Epibarrierenschichten jeweils aus einem Metall ausgebildet sind.

9. Eine im Wesentlichen für Gas undurchlässige Struktur nach einem der vorangegangen Ansprüche, wobei gegebenenfalls die erste Barrierenschicht und die Epibarrierenschicht jeweils aus einem Stoff ausgebildet ist, der entweder aus Metall und Metall, Metall und Metalloxid ausgewählt wird.

10. Verfahren zum Ausbilden einer Struktur, welche Folgendes umfasst:
Ausbilden einer Templatschicht mit einer ersten Oberfläche mit einem optisch aktiven Oberflächenrelief; und
Ausbilden einer Epibarrierenschicht über der Templatschicht, wobei die Epibarrierenschicht ein optisch aktives Oberflächenrelief aufweist, das im Wesentlichen dem Oberflächenrelief der Templatschicht entspricht,
wobei der Schritt des Ausbildens der Templatschicht das Auftragen einer Formulierung umfasst, welche eine Vielzahl von Partikeln umfasst, die in einem Bindemittel bereitgestellt werden, wobei die Templatschicht ausgebildet ist, wobei die Partikel so angeordnet sind, dass sie im Wesentlichen eine ganze Dicke der Templatschicht überspannen und das optisch aktive Oberflächenrelief bereitstellen,
das Verfahren das Ausbilden der Templatschicht über einer ersten Barrierenschicht umfasst,
**dadurch gekennzeichnet, dass** das Verfahren das Ausbilden der ersten Barrierenschicht aus einem Metall und das Ausstatten der ersten Barrierenschicht mit einem optisch aktiven Oberflächenrelief umfasst, wobei das optisch aktive Oberflächenrelief gegebenenfalls mindestens ein Oberflächenrelief, das unter einem holographischen Oberflächenrelief, einem nicht-holografischen diffraktiven Oberflächenrelief und einem diffusiven Oberflächenrelief ausgewählt wird, ausgestattet ist.

11. Verfahren nach Anspruch 10, wobei die Templatschicht mittels eines Tiefdruckbeschichtungsverfahrens ausgebildet wird.

12. Verfahren nach Anspruch 10 oder Anspruch 11, wobei die Epibarrierenschicht aus mindestens einem Stoff ausgebildet ist, der entweder aus einem Metall oder einem Metalloxid ausgewählt wird, wobei das Verfahren gegebenenfalls weiterhin den Schritt des Prägens der ersten Barrierenschicht umfasst, um dadurch die erste Barrierenschicht mit einem optisch aktiven Oberflächenrelief auszustatten, bevorzugt einem holografischen Oberflächenrelief.

13. Verfahren zum Schutz von Informationen, welches den Schritt des Verbindens einer Struktur nach Anspruch 7, Anspruch 8 oder Anspruch 9, der auf Anspruch 7 rückbezogen ist, mit einer Struktur, welche vertrauliche Informationen trägt, mittels des abkratzbaren Klebemittels umfasst.

## Revendications

1. Structure comprenant :
une couche de gabarit ayant une première surface ayant un relief de surface optiquement actif; et
une couche épibarrière prévue sur la première surface de la couche de gabarit, la couche épibarrière ayant un relief de surface optiquement actif correspondant sensiblement à celui de la première surface de la couche de gabarit,
la couche de gabarit comprenant une pluralité de particules agencées pour couvrir sensiblement une épaisseur totale de la couche de gabarit et pour former ledit relief de surface optiquement actif, la couche de gabarit étant formée sur une première couche barrière,
**caractérisée en ce que** la première couche barrière est formée à partir d'un métal et est munie d'un relief de surface optiquement actif, le relief de surface optiquement actif ayant éventuellement au moins un élément choisi parmi un relief de surface holographique, un relief de surface de diffraction non holographique et un relief de surface de diffusion.

2. Structure telle que revendiquée dans la revendication 1, dans laquelle la couche épibarrière est formée à partir d'au moins un élément choisi parmi un métal et un oxyde de métal.

3. Structure telle que revendiquée dans la revendication 1 ou la revendication 2, dans laquelle les particules sont liées à un matériau liant prévu entre les particules, les particules comprenant éventuellement au moins un élément choisi parmi un métal et un matériau céramique, le matériau céramique étant éventuellement le trioxyde d'aluminium, le dioxyde de titane ou le carbonate de calcium et le liant étant éventuellement un polymère mou, de préférence un acrylate.

4. Structure telle que revendiquée dans la revendication 3, dans laquelle la couche de liant a une épaisseur inférieure ou sensiblement égale à la moitié d'un diamètre moyen des particules sèches.

5. Structure telle que revendiquée dans l'une quelconque des revendications précédentes, dans laquelle la couche de gabarit possède un relief de surface ayant une variation locale en hauteur entre une région de pic et une région de creux de la surface, vue en section transversale, dans la plage d'environ 0,1 à environ 5 x 10⁻⁶ m (0,1 à 5 microns), de préférence d'environ 2 x 10⁻⁶m (2 microns), le relief de surface ayant en outre un espacement latéral entre des régions de pics adjacentes respectives ou des régions de creux adjacentes respectives d'environ 0,1 à environ 5 x 10⁻⁶m (0,1 à 5 microns), de préférence d'environ 2 x 10⁻⁶m (2 microns).

6. Structure telle que revendiquée dans l'une quelconque des revendications précédentes, dans laquelle le diamètre moyen des particules se situe dans la plage d'environ 1 à environ 5 microns, de préférence d'environ 10"⁶m (1 micron) à environ 3,5 x 10⁻⁶ m (3,5 microns), de manière davantage préférée d'environ 2 x 10⁻⁶ m (2 microns).

7. Structure telle que revendiquée dans l'une quelconque des revendications précédentes, dans laquelle une couche d'un adhésif à gratter est prévue sur la couche épibarrière, la structure pouvant ainsi être collée à un article, la structure étant éventuellement prévue sur un support.

8. Feuille à gratter holographique ultra-opaque comprenant une structure telle que revendiquée dans la revendication 7, dans laquelle le relief de surface optiquement actif est un relief de surface holographique et la première couche et la couche épibarrière sont chacune formées d'un métal.

9. Structure sensiblement imperméable aux gaz comprenant une structure telle que revendiquée dans l'une quelconque des revendications précédentes, dans laquelle éventuellement la première couche barrière et la couche épibarrière sont formées respectivement d'un élément choisi parmi métal et métal, métal et oxyde de métal.

10. Procédé de formation d'une structure comprenant :
la formation d'une couche de gabarit ayant une première surface ayant un relief de surface optiquement actif ; et
la formation d'une couche épibarrière sur la couche de gabarit, la couche épibarrière ayant une première surface ayant un relief de surface optiquement actif correspondant sensiblement à celui de la couche de gabarit,
l'étape de formation de la couche de gabarit comprenant le dépôt d'une formulation comprenant une pluralité de particules prévues dans un liant, la couche de gabarit étant formée de telle sorte que les particules soient agencées pour couvrir sensiblement une épaisseur totale de la couche de gabarit et pour former le relief de surface optiquement actif,
le procédé comprenant la formation de la couche de gabarit sur une première couche barrière,
**caractérisé en ce que** le procédé comprend la formation de la première couche barrière à partir d'un métal et la fourniture à la première couche barrière d'un relief de surface optiquement actif, le relief de surface optiquement actif ayant éventuellement au moins un élément choisi parmi un relief de surface holographique, un relief de surface de diffraction non holographique et une relief de surface de diffusion.

11. Procédé tel que revendiqué dans la revendication 10, dans lequel la couche de gabarit est formée au moyen d'un processus d'enduction par gravure.

12. Procédé tel que revendiqué dans la revendication 10 ou la revendication 11, dans lequel la couche épibarrière est formée à partir d'au moins un élément choisi parmi un métal et un oxyde de métal, le procédé comprenant éventuellement en outre l'étape de gaufrage de la première couche barrière pour ainsi fournir à la première couche barrière un relief de surface optiquement actif, de préférence un relief de surface holographique.

13. Procédé de protection d'informations comprenant l'étape de liaison d'une structure telle que revendiquée dans la revendication 7, la revendication 8 ou la revendication 9 telle que dépendante de la revendication 7, à une surface porteuse d'informations confidentielles au moyen dudit adhésif à gratter.
